# EUROPEAN PATENT APPLICATION

(11) **EP 3 606 227 A1**
(43) Date of publication of application: **05.02.2020**
(21) Application number: 18772260.8
(22) Date of filing: 21.03.2018
(51) Int. Cl.: H04W 72/04

(54) **METHOD, AND APPARATUS FOR DETERMINING DATA TRANSMISSION RESOURCE, TERMINAL, BASE STATION AND DEVICE**

(30) Priority: 24.03.2017 CN 201710184822
(71) Applicant: ZTE Corporation, Shenzhen, Guangdong 518057 (CN)
(72) Inventor: GOU, Wei, Shenzhen Guangdong 518057 (CN); BI, Feng, Shenzhen Guangdong 518057 (CN); HAO, Peng, Shenzhen Guangdong 518057 (CN)
(74) Representative: Ricker, Mathias
(86) International application number: PCT/CN2018/079711
(87) International publication number: WO 2018/171597

(57) **Abstract**

Disclosed is a method for determining a data transmission resource. The method includes: sending physical uplink shared channel (PUSCH) resource information and indication information, where the PUCCH resource information includes information used for indicating a resource allocated for data transmission of a user equipment (UE) in a PUSCH, and the indication information is used for indicating whether the resource for data transmission includes a physical uplink control channel (PUCCH) resource, and/or a resource actually used for data transmission in the resource for data transmission. Further disclosed are an apparatus for determining a data transmission resource, a terminal, a base station, a device and a computer-readable storage medium.

## Description

### CROSS-REFERENCES TO RELATED APPLICATIONS

This application claims priority to a Chinese patent application No. 201710184822.3 filed on March 24, 2017, disclosure of which is incorporated herein by reference in its entirety.

### TECHNICAL FIELD

The present disclosure relates to the technical field of resource allocation in communications and, in particular, to a method and apparatus for determining a data transmission resource, a terminal, a base station and a device.

### BACKGROUND

A New Radio (NR) communication system is being studied and standardized. In the NR system that can be determined at present, there will be three typical and common service types in the further, including enhanced Mobile BroadBand (eMBB), Ultra-Reliable and Low Latency Communications (URLLC) and massive Machine Type Communications (mMTC). These services have different requirements for latency, coverage, reliability and the like. For example, for the eMBB, a high peak transmission rate is mainly emphasized, requirements for the latency are not high (no demand for low latency), and requirements for the reliability are medium; for the URLLC, low-latency and high-reliability transmission is emphasized, and requirements for the latency are very strict; and for the mMTC, a large number of terminals are emphasized, the connection density is high, a larger transmission coverage is required, and there is little requirement for the latency.

The physical uplink control channel (PUCCH) resources in the NR system are divided into short PUCH resources and long PUCCH resources for different purposes. For example, a short PUCCH resource is generally located at end of a slot (or called a scheduling unit, and the slot is just one of designations), and occupies several Orthogonal Frequency Division Multiplexing (OFDM) symbols (e.g., one or two OFDM symbols). Some companies propose to place the short PUCCH resource in several symbols before uplink data in a slot, such as several symbols at end of a downlink slot or several symbols at end of an uplink slot. The short PUCCH resource is mainly used for a timely ACKnowledgement (ACK)/Negative ACKnowledgement (NACK) feedback and also used for transmission of other Channel State Information (CSI), and is mainly used by user equipment (UE) near the center of a cell. For example, the long PUCCH resource occupies more OFDM symbols, and is mainly used by UE on the edge of a cell. When more symbols are used, coverage of the long PUCCH resource is improved, so the long PUCCH resource is introduced mainly for a wider coverage.

In the current discussion on the NR standard, in a slot, the short PUCCH resource and a physical uplink shared channel (PUSCH) resource are allowed to be frequency division multiplexed in an area of the short PUCCH resource. Furthermore, short PUCCH resources of different UEs are allowed to be time division multiplexed such that the different UEs may use different beam directions.

However, in the current solution, in order to enable a resource of uplink data (a PUSCH resource carrying the uplink data may also be referred to as the PUSCH resource) of the UE to multiplex an unused short PUCCH resource. However, there is not yet a proper method to solve the problem of how a UE determines its resource actually used for PUSCH transmission, especially when the PUCCH resource (herein, including the long PUCCH resource and/or the short PUCCH resource, and without otherwise specified hereinafter, the PUCCH resource may be the long PUCCH resource and/or the short PUCCH resource) and the PUSCH resource for transmission of different UEs are present in the same Physical Resource Block (PRB), which results in more wasted resources, high overhead, and low indication efficiency.

### SUMMARY

In view of this, embodiments of the present disclosure provide a method and apparatus for determining a data transmission resource, a terminal, a base station and a device, to solve one or more of problems of high indication overhead, low indication efficiency and major resource waste.

The technical solutions of the present disclosure are implemented as follows.

The present disclosure provides a method for determining a data transmission resource. The method includes a step described below.

PUSCH resource information and indication information are sent.

The PUCCH resource information includes information used for indicating a resource allocated for data transmission of a UE in a PUSCH, and the indication information is used for indicating at least one of the followings:
whether the resource for data transmission includes a PUCCH resource;
a resource actually used for data transmission in the resource for data transmission; or
whether rate matching is required for the resource for data transmission to remove a resource occupied by a PUCCH.

The present disclosure provides a method for determining a data transmission resource. The method includes a step described below.

PUSCH resource information and indication information sent by a base station are received.

The PUSCH resource information includes information used for indicating a resource for data transmission allocated by the base station in a PUSCH, and the indication information is used for indicating at least one of the followings:
whether the resource for data transmission includes a PUCCH resource;
a resource actually used for data transmission in the resource for data transmission; or
whether rate matching is required for the resource for data transmission to remove a resource occupied by a PUCCH.

The present disclosure further provides a first apparatus for determining a data transmission resource. The first apparatus includes a sending module.

The sending module is configured to send PUSCH resource information and indication information.

The PUCCH resource information includes information used for indicating a resource allocated for data transmission of a UE in a PUSCH, and the indication information is used for indicating at least one of the followings:
whether the resource for data transmission includes a PUCCH resource;
a resource actually used for data transmission in the resource for data transmission; or
whether rate matching is required for the resource for data transmission to remove a resource occupied by a PUCCH.

The present disclosure further provides a first terminal for determining a data transmission resource. The first terminal includes a receiving module.

The receiving module is configured to receive PUSCH information and indication information sent by a base station.

The PUSCH resource information includes information used for indicating a resource for data transmission allocated by the base station in a PUSCH, and the indication information is used for indicating at least one of the followings:
whether the resource for data transmission includes a PUCCH resource;
a resource actually used for data transmission in the resource for data transmission; or
whether rate matching is required for the resource for data transmission to remove a resource occupied by a PUCCH.

The present disclosure further provides a method for determining a data transmission resource. The method includes steps described below.

Allocation information of a PUCCH resource in a slot is notified or broadcasted.

A resource for data transmission is allocated in a PUSCH.

Data is received via the allocated resource for data transmission, and a resource occupied by a PUCCH is removed from the resource for data transmission to obtain a resource actually used for data transmission in the resource for data transmission.

The present disclosure further provides a method for determining a data transmission resource. The method includes steps described below.

Allocation information of a PUCCH resource in a slot notified or broadcasted by a base station is received, and information of a resource for data transmission in a PUSCH sent by the base station is received.

A resource occupied by a PUCCH is removed from a resource corresponding to the information of the resource for data transmission to obtain a resource actually used for data transmission in the resource for data transmission.

The present disclosure further provides a second apparatus for determining a data transmission resource. The second apparatus includes a sending module, an allocating module and a processing module.

The sending module is configured to notify or broadcast allocation information of a PUCCH resource in a slot.

The allocating module is configured to allocate a resource for data transmission in a PUSCH.

The processing module is configured to receive data via the allocated resource for data transmission, and remove a resource occupied by a PUCCH from a resource corresponding to information of the resource for data transmission to obtain a resource actually used for data transmission in the resource for data transmission.

The present disclosure further provides a second terminal for determining a data transmission resource. The second terminal includes a receiving module and a processing module.

The receiving module is configured to receive allocation information of a PUCCH resource in a slot notified or broadcasted by a base station, and receive information of a resource for data transmission in a PUSCH sent by the base station.

The processing module is configure to remove a resource occupied by a PUCCH from a resource corresponding to the information of the resource for data transmission to obtain a resource actually used for data transmission in the resource for data transmission.

The present disclosure further provides a first base station for determining a data transmission resource. The first base station includes an interface, a bus, a memory and a processor.

The interface, the memory and the processor are connected via the bus, the memory is configured to store instructions, and the processor reads the instructions to perform a step described below.

PUSCH resource information and indication information are sent.

The PUCCH resource information includes information used for indicating a resource allocated for data transmission of a UE in a PUSCH, and the indication information is used for indicating at least one of the followings: whether the resource for data transmission includes a PUCCH resource; a resource actually used for data transmission in the resource for data transmission; or whether rate matching is required for the resource for data transmission to remove a resource occupied by a PUCCH.

The present disclosure further provides a first device for determining a data transmission resource. The first device includes an interface, a bus, a memory and a processor.

The interface, the memory and the processor are connected via the bus, the memory is configured to store instructions, and the processor reads the instructions to perform a step described below.

PUSCH resource information and indication information sent by a base station are received.

The PUSCH resource information includes information used for indicating a resource for data transmission allocated by the base station in a PUSCH, and the indication information is used for indicating at least one of the followings: whether the resource for data transmission includes a PUCCH resource; a resource actually used for data transmission in the resource for data transmission; or whether rate matching is required for the resource for data transmission to remove a resource occupied by a PUCCH.

The present disclosure further provides a second base station for determining a data transmission resource. The second base station includes an interface, a bus, a memory and a processor.

The interface, the memory and the processor are connected via the bus, the memory is configured to store instructions, and the processor reads the instructions to perform steps described below.

Allocation information of a PUCCH resource in a slot is notified or broadcasted.

A resource for data transmission is allocated in a PUSCH.

Data is received via the allocated resource for data transmission, and a resource occupied by a PUCCH is removed from a resource corresponding to information of the resource for data transmission to obtain a resource actually used for data transmission in the resource for data transmission.

The present disclosure further provides a second device for determining a data transmission resource. The second device includes an interface, a bus, a memory and a processor.

The interface, the memory and the processor are connected via the bus, the memory is configured to store instructions, and the processor reads the instructions to perform steps described below.

Allocation information of a PUCCH resource in a slot notified or broadcasted by a base station is received, and information of a resource for data transmission in a PUSCH sent by the base station is received.

A resource occupied by a PUCCH is removed from a resource corresponding to the information of the resource for data transmission to obtain a resource actually used for data transmission in the resource for data transmission.

The present disclosure further provides a computer-readable storage medium. The computer-readable storage medium is configured to store computer-executable instructions capable of implementing the method for determining a data transmission resource provided by one or more forgoing technical solutions when executed by a processor.

In the method and apparatus for determining a data transmission resource, the terminal, the base station and the device provided by the embodiments of the present disclosure, PUSCH resource information and indication information are received, where the PUCCH resource information includes information used for indicating a resource allocated for data transmission of a UE in a PUSCH, and the indication information is used for indicating whether the resource for data transmission includes a PUCCH resource, and/or the indication information is used for indicating a resource actually used for data transmission in the resource for data transmission, and/or the indication information is used for indicating whether rate matching is required for the resource for data transmission to remove a resource occupied by a PUCCH.

In such a way, the base station sends one resource indication, and the UE can not only determine resource information of a PUSCH allocated by the base station to the UE according to the PUCCH resource information, but also determine whether to use a resource of the PUCCH to transmit data according to the indication information and/or determine a resource actually used for data transmission. Therefore, the UE obtains more comprehensive and accurate information of a resource for data transmission, the indication efficiency of a base station is improved, and the indication overhead is reduced. At the same time, the data can be transmitted by using idle resources of the PUCCH, and the PUCCH is not limited for signaling transmission, thereby improving an efficient utilization rate of resources and reducing the resource waste. For example, in an NR system, the base station and the UE can determine an actual transmission PUSCH resource, such that when the PUSCH and the PUCCH are frequency division multiplexed, the base station and the UE can accurately and quickly know the actual transmission PUSCH resource from allocated transmission PUSCH resources, effectively saving system resources, reducing overhead and improving indication efficiency. In addition, in the method and apparatus for determining a data transmission resource, the terminal, the base station and the device provided by the embodiments of the present disclosure, the base station notifies or broadcasts allocation information of a PUCCH resource in a slot; allocates a resource for data transmission in a PUSCH; and receives data sent by the base station via the allocated resource for data transmission, and removes a resource occupied by the PUCCH from the resource for data transmission to obtain a resource actually used for data transmission in the resource for data transmission. In an NR system, the base station and the UE can determine the actual transmission PUSCH resource, such that when the PUSCH and the PUCCH are frequency division multiplexed, the base station and the UE can accurately and quickly know the actual transmission PUSCH resource from allocated transmission PUSCH resources, effectively saving system resources, reducing the overhead and improving the indication efficiency.

### BRIEF DESCRIPTION OF DRAWINGS

FIG. 1 is a flowchart of an embodiment 1 of a method for determining a data transmission resource in the present disclosure;
FIG. 2 is a flowchart of an embodiment 2 of a method for determining a data transmission resource in the present disclosure;
FIG. 3 is a schematic diagram 1 of determination of a transmission PUSCH resource in a slot in an embodiment of a method for determining a data transmission resource in the present disclosure;
FIG. 4 is a schematic diagram 2 of determination of a transmission PUSCH resource in a slot in an embodiment of a method for determining a data transmission resource in the present disclosure;
FIG. 5 is a schematic diagram 3 of determination of a transmission PUSCH resource in a slot in embodiments of a method for determining a data transmission resource in the present disclosure;
FIG. 6 is a schematic diagram 4 of determination of a transmission PUSCH resource in a slot in an embodiment of a method for determining a data transmission resource in the present disclosure;
FIG. 7 is a structural diagram of a first apparatus for determining a data transmission resource in the present disclosure;
FIG. 8 is a structural diagram of a first terminal for determining a data transmission resource in the present disclosure;
FIG. 9 is a flowchart of an embodiment 3 of a method for determining a data transmission resource in the present disclosure;
FIG. 10 is a flowchart of an embodiment 4 of a method for determining a data transmission resource in the present disclosure;
FIG. 11 is a structural diagram of a second apparatus for determining a data transmission resource in the present disclosure;
FIG. 12 is a structural diagram of a second terminal for determining a data transmission resource in the present disclosure;
FIG. 13 is a structural diagram of a first base station for determining a data transmission resource in the present disclosure;
FIG. 14 is a structural diagram of a first device for determining a data transmission resource in the present disclosure;
FIG. 15 is a structural diagram of a second base station for determining a data transmission resource in the present disclosure; and
FIG. 16 is a structural diagram of a second device for determining a data transmission resource in the present disclosure.

### DETAILED DESCRIPTION

Technical solutions in embodiments of the present disclosure will be described clearly and completely in conjunction with drawings in the embodiments of the present disclosure.

The following embodiments may exist separately, and technical features of different embodiments may be combined into one embodiment for joint use. The PUSCH resource herein is generally referred to as a PRB resource, and the PUCCH resource may be a PRB, an OFDM symbol, a subcarrier and any combination thereof. Without otherwise specified hereinafter, the PUCCH resource may be a long PUCCH resource and/or a short PUCCH resource. The PUSCH and the PUCCH herein correspond to a physical uplink data channel (which is also designated according to transmission characteristics, such as uplink data or an uplink data area) and a physical uplink control channel (which is also designated according to transmission characteristics, such as an uplink control area or uplink control) respectively. In standard formulation of the NR, the PUSCH and the PUCCH may also be abbreviated as NR-PUSCH and NR-PUCCH, but they still are the physical uplink data channel and the physical uplink control channel, and content that they carry does not changed, so these designations do not affect the implementation of the method herein.

The slot herein represents a time slot, and may also represent a scheduling unit, i.e., a time unit including multiple OFDM symbol in terms of time. The slot is used as a representation herein for illustration purposes, but in practice, the slot is not limited to a scheduling unit composed of seven symbols or 14 symbols.

In the present disclosure, if not in collision, technical features of the various embodiments may be combined in one embodiment to use, and each embodiment is merely the best implementation of the present application.

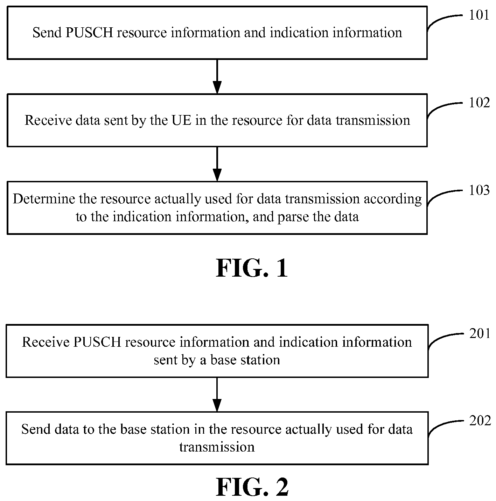

FIG. 1 is a flowchart of an embodiment 1 of a method for determining a data transmission resource in the present disclosure. As shown in FIG. 1, this method is applied to a base station side, and the main idea is that a base station does not notify or broadcast an allocation situation of a PUCCH resource for a UE in a slot in advance, but directly indicates a resource actual used for PUCCH transmission of the UE.

This method includes steps described below.

In step 101, PUSCH resource information and indication information are sent.

The base station sends the PUSCH resource information and the indication information, where the PUCCH resource information includes information used for indicating a resource allocated for data transmission of a UE in a PUSCH, and the indication information is used for indicating whether the resource for data transmission includes a PUCCH resource, and/or the indication information is used for indicating a resource actually used for data transmission in the resource for data transmission, and/or the indication information is used for indicating whether rate matching is required for the resource for data transmission to remove a resource occupied by a PUCCH. That is, the indication information is used for indicating at least one of the followings: whether the resource for data transmission includes a PUCCH resource; a resource actually used for data transmission in the resource for data transmission; or whether rate matching is required for the resource for data transmission to remove a resource occupied by a PUCCH. If the indication information can be used for indicating whether the resource for data transmission includes a PUCCH resource, if the resource for data transmission includes the PUCCH resource, the UE, when sending data, needs part of unused resources for data transmission, and the resources are used for control information transmission in the PUCCH. If the indication information is used for indicating whether the rate matching is required for the resource for data transmission to remove the resource occupied by the PUCCH, during the data transmission, the UE first needs to remove the resource occupied by the PUCCH in the resource for data transmission, and after that, performs the rate matching, such that the UE maintains effective data sending quantity with fewer resources. For example, the resource for data transmission includes A, if the indication information indicates that A includes a resource B occupied by the PUCCH, a resource capable of being used for data transmission of the UE is A-B, and if the UE sends data C via A, after B is removed, the UE needs to perform the rate matching to send the data C via A-B. For example, the data C is coded in a more effective coding manner such that the data quantity of the data C is reduced, thereby smoothly sending the data C through A-B. In step 102, data sent by the UE in the resource for data transmission is received.

The base station receives the data sent by the UE in the resource for data transmission, where the resource for data transmission can be a resource for uplink data transmission (e.g., a resource for PUSCH transmission).

In step 103, the resource actually used for data transmission is determined according to the indication information, and the data is parsed.

The base station determines the resource actually used for data transmission according to the indication information, and parses the data.

In this embodiment, when the PUCCH resource is a short PUCCH resource, the indication information includes at least one of the followings:
indication of inexistence of a short PUCCH resource in the resource for data transmission, where the inexistence of the short PUCCH resource includes: inexistence of a short PUCCH resource for a current UE, and inexistence of a short PUCCH resource for any UE other than the current UE;
indication of existence of a short PUCCH resource for a current UE in the resource for data transmission;
indication of one or more OFDM symbols unused by the resource for data transmission;
indication of an OFDM symbol at start of the resource for data transmission and/or an OFDM symbol at end of the resource for data transmission;
indication of one or more OFDM symbols unused by the resource for data transmission, and indication of inexistence of a short PUCCH resource in the resource for data transmission, where the inexistence of the short PUCCH resource includes: inexistence of a short PUCCH resource for a current UE, and/or inexistence of a short PUCCH resource for any UE other than the current UE;
indication of one or more OFDM symbols unused by the resource for data transmission, and indication of existence of a short PUCCH resource for the first terminal in the resource for data transmission;
indication of an OFDM symbol at start of the resource for data transmission and/or an OFDM symbol at end of the resource for data transmission, and indication of inexistence of a short PUCCH resource in the resource for data transmission, where the inexistence of the short PUCCH resource includes: inexistence of a short PUCCH resource for a current UE, and inexistence of a short PUCCH resource for any UE other than the current UE; or
indication of an OFDM symbol at start of the resource for data transmission and/or an OFDM symbol at end of the resource for data transmission, and indication of existence of a short PUCCH resource for a current UE in the resource for data transmission.

In this embodiment, when the PUCCH resource is a long PUCCH resource, the indication information includes at least one of the followings:
indication of inexistence of a long PUCCH resource in the resource for data transmission, where the inexistence of the long PUCCH resource includes: inexistence of a long PUCCH resource for a current UE, and/or inexistence of a long PUCCH resource for any UE other than the current UE;
indication of existence of a long PUCCH resource for a current UE in the resource for data transmission;
indication of one or more OFDM symbols unused by the resource for data transmission;
indication of an OFDM symbol at start of the resource for data transmission and/or an OFDM symbol at end of the resource for data transmission;
indication of one or more OFDM symbols unused by the resource for data transmission, and indication of inexistence of a long PUCCH resource in the resource for data transmission, where the inexistence of the long PUCCH resource includes: inexistence of a long PUCCH resource for a current UE, and inexistence of a long PUCCH resource for any UE other than the current UE;
indication of one or more OFDM symbols unused by the resource for data transmission, and indication of existence of a long PUCCH resource for a current UE in the resource for data transmission;
indication of an OFDM symbol at start of the resource for data transmission and/or an OFDM symbol at end of the resource for data transmission, and indication of inexistence of a long PUCCH resource in the resource for data transmission, where the inexistence of the long PUCCH resource includes: inexistence of a long PUCCH resource for a current UE, and inexistence of a long PUCCH resource for any UE other than the current UE; or
indication of an OFDM symbol at start of the resource for data transmission and/or an OFDM symbol at end of the resource for data transmission, and indication of existence of a long PUCCH resource for a current UE in the resource for data transmission.

In this embodiment, when the PUCCH resource is a combination of a short PUCCH resource and a long PUCCH resource, the indication information includes at least one of the followings:
indication of inexistence of a short PUCCH resource or a long PUCCH resource in the resource for data transmission, where the inexistence of the short PUCCH resource or the long PUCCH resource includes: inexistence of a short PUCCH resource or a long PUCCH resource for a current UE, and inexistence of a short PUCCH resource or a long PUCCH resource for any UE other than the current UE;
indication of existence of a short PUCCH resource for a current UE in the resource for data transmission, inexistence of a long PUCCH resource for the current UE in the resource for data transmission, and inexistence of a short PUCCH resource or a long PUCCH resource for any UE other than the current UE in the resource for data transmission;
indication of inexistence of a short PUCCH resource for a current UE in the resource for data transmission, existence of a long PUCCH resource for the current UE in the resource for data transmission, and inexistence of a short PUCCH resource or a long PUCCH resource for any UE other than the current UE in the resource for data transmission;
indication of existence of a short PUCCH resource and a long PUCCH resource for a current UE in the resource for data transmission, and inexistence of a short PUCCH resource or a long PUCCH resource for any UE other than the current UE in the resource for data transmission;
indication of one or more OFDM symbols unused by the resource for data transmission;
indication of an OFDM symbol at start of the resource for data transmission and/or an OFDM symbol at end of the resource for data transmission;
indication of one or more OFDM symbols unused by the resource for data transmission, and indication of inexistence of a short PUCCH resource or a long PUCCH resource in the resource for data transmission, where the inexistence of the short PUCCH resource or the long PUCCH resource includes: inexistence of a short PUCCH resource or a long PUCCH resource for a current UE, and inexistence of a short PUCCH resource or a long PUCCH resource for any UE other than the current UE;
indication of one or more OFDM symbols unused by the resource for data transmission, and indication of existence of a short PUCCH resource for a current UE in the resource for data transmission, inexistence of a long PUCCH resource for the current UE in the resource for data transmission, and inexistence of a short PUCCH resource or a long PUCCH resource for any UE other than the current UE in the resource for data transmission;
indication of one or more OFDM symbols unused by the resource for data transmission, and indication of inexistence of a short PUCCH resource for a current UE in the resource for data transmission, existence of a long PUCCH resource for the current UE in the resource for data transmission, and inexistence of a short PUCCH resource or a long PUCCH resource for any UE other than the current UE in the resource for data transmission;
indication of one or more OFDM symbols unused by the resource for data transmission, and indication of existence of a short PUCCH resource and a long PUCCH resource for a current UE in the resource for data transmission, and inexistence of a short PUCCH resource or a long PUCCH resource for any UE other than the current UE in the resource for data transmission;
indication of an OFDM symbol at start of the resource for data transmission and/or an OFDM symbol at end of the resource for data transmission, and indication of inexistence of a short PUCCH resource or a long PUCCH resource in the resource for data transmission, where the inexistence of the short PUCCH resource or the long PUCCH resource includes: inexistence of a short PUCCH resource or a long PUCCH resource for a current UE, and inexistence of a short PUCCH resource or a long PUCCH resource for any UE other than the current UE;
indication of an OFDM symbol at start of the resource for data transmission and/or an OFDM symbol at end of the resource for data transmission, and indication of existence of a short PUCCH resource for a current UE in the resource for data transmission, inexistence of a long PUCCH resource for the current UE in the resource for data transmission, and inexistence of a short PUCCH resource or a long PUCCH resource for any UE other than the current UE in the resource for data transmission;
indication of an OFDM symbol at start of the resource for data transmission and/or an OFDM symbol at end of the resource for data transmission, and indication of inexistence of a short PUCCH resource for a current UE in the resource for data transmission, existence of a long PUCCH resource for the current UE in the resource for data transmission, and inexistence of a short PUCCH resource or a long PUCCH resource for any UE other than the current UE in the resource for data transmission; or
indication of an OFDM symbol at start of the resource for data transmission and/or an OFDM symbol at end of the resource for data transmission, and indication of existence of a short PUCCH resource and a long PUCCH resource for a current UE in the resource for data transmission, and inexistence of a short PUCCH resource or a long PUCCH resource for any UE other than the current UE in the resource for data transmission.

In this embodiment, the short PUCCH resource and the long PUCCH resource can be different types of predefined PUCCH resources and occupy the PUCCH, but they have different resource lengths, or different use objectives, or different resource position on a control channel. For example, a resource length of one long PUCCH resource is greater than a resource length of one short PUCCH resource.

Through the method in this embodiment, in an NR system, the base station and the UE can determine an actual transmission PUSCH resource, such that when the PUSCH and the PUCCH are frequency division multiplexed, the base station and the UE can accurately and quickly know the actual transmission PUSCH resource from allocated transmission PUSCH resources, effectively saving system resources, reducing overhead and improving indication efficiency.

FIG. 2 is a flowchart of an embodiment 2 of a method for determining a data transmission resource in the present disclosure. As shown in FIG. 2, this method is applied to a UE side, and the main idea is that a base station does not notify or broadcast an allocation situation of a PUCCH resource for a UE in a slot in advance, but the UE directly obtains a resource actually used for PUCCH transmission according to the indication of the base station.

This method includes steps described below.

In step 201, PUSCH resource information and indication information sent by a base station are received.

The UE receives the PUSCH resource information and the indication information sent by the base station, where the PUCCH resource information includes information used for indicating a resource for data transmission allocated by the base station in a PUSCH, and the indication information is used for indicating whether the resource for data transmission includes a PUCCH resource, and/or the indication information is used for indicating a resource actually used for data transmission in the resource for data transmission, and/or the indication information is used for indicating whether rate matching is required for the resource for data transmission to remove a resource occupied by a PUCCH. The resource for data transmission can be a resource for uplink data transmission (e.g., a resource for PUSCH transmission). That is, the indication information is used for indicating at least one of the followings: whether the resource for data transmission includes a PUCCH resource; a resource actually used for data transmission in the resource for data transmission; or whether rate matching is required for the resource for data transmission to remove a resource occupied by a PUCCH.

In step 202, data is sent to the base station in the resource actually used for data transmission.

The UE sends the data to the base station in the resource actually used for data transmission.

In this embodiment, when the PUCCH resource is a short PUCCH resource, the indication information includes at least one of the followings:
indication of inexistence of a short PUCCH resource in the resource for data transmission, where the inexistence of the short PUCCH resource includes: inexistence of a short PUCCH resource for a current UE, and/or inexistence of a short PUCCH resource for any UE other than the current UE;
indication of existence of a short PUCCH resource for a current UE in the resource for data transmission;
indication of one or more OFDM symbols unused by the resource for data transmission;
indication of an OFDM symbol at start of the resource for data transmission and/or an OFDM symbol at end of the resource for data transmission;
indication of one or more OFDM symbols unused by the resource for data transmission, and indication of inexistence of a short PUCCH resource in the resource for data transmission, where the inexistence of the short PUCCH resource includes: inexistence of a short PUCCH resource for a current UE, and/or inexistence of a short PUCCH resource for any UE other than the current UE;
indication of one or more OFDM symbols unused by the resource for data transmission, and indication of existence of a short PUCCH resource for the first terminal in the resource for data transmission;
indication of an OFDM symbol at start of the resource for data transmission and/or an OFDM symbol at end of the resource for data transmission, and indication of inexistence of the short PUCCH resource in the resource for data transmission, where the inexistence of the short PUCCH resource includes: inexistence of a short PUCCH resource for a current UE, and inexistence of a short PUCCH resource for any UE other than the current UE; or
indication of an OFDM symbol at start of the resource for data transmission and/or an OFDM symbol at end of the resource for data transmission, and indication of existence of a short PUCCH resource for a current UE in the resource for data transmission.

In this embodiment, when the PUCCH resource is a long PUCCH resource, the indication information includes at least one of the followings:
indication of inexistence of a long PUCCH resource in the resource for data transmission, where the inexistence of the long PUCCH resource includes: inexistence of a long PUCCH resource for a current UE, and inexistence of a long PUCCH resource for any UE other than the current UE;
indication of existence of a long PUCCH resource for a current UE in the resource for data transmission;
indication of one or more OFDM symbols unused by the resource for data transmission;
indication of an OFDM symbol at start of the resource for data transmission and/or an OFDM symbol at end of the resource for data transmission;
indication of one or more OFDM symbols unused by the resource for data transmission, and indication of inexistence of a long PUCCH resource in the resource for data transmission, where the inexistence of the long PUCCH resource includes: inexistence of a long PUCCH resource for a current UE, and/or inexistence of a long PUCCH resource for any UE other than the current UE;
indication of one or more OFDM symbols unused by the resource for data transmission, and indication of existence of a long PUCCH resource for a current UE in the resource for data transmission;
indication of an OFDM symbol at start of the resource for data transmission and/or an OFDM symbol at end of the resource for data transmission, and indication of inexistence of a long PUCCH resource in the resource for data transmission, where the inexistence of the long PUCCH resource includes: inexistence of a long PUCCH resource for a current UE, and inexistence of a long PUCCH resource for any UE other than the current UE; or
indication of an OFDM symbol at start of the resource for data transmission and/or an OFDM symbol at end of the resource for data transmission, and indication of existence of a long PUCCH resource for a current UE in the resource for data transmission.

In this embodiment, when the PUCCH resource is a combination of a short PUCCH resource and a long PUCCH resource, the indication information includes at least one of the followings:
indication of inexistence of a short PUCCH resource or a long PUCCH resource in the resource for data transmission, where the inexistence of the short PUCCH resource or the long PUCCH resource includes: inexistence of a short PUCCH resource or a long PUCCH resource for a current UE, and inexistence of a short PUCCH resource or a long PUCCH resource for any UE other than the current UE;
indication of existence of a short PUCCH resource for a current UE in the resource for data transmission, inexistence of a long PUCCH resource for the current UE in the resource for data transmission, and inexistence of a short PUCCH resource or a long PUCCH resource for any UE other than the current UE in the resource for data transmission;
indication of inexistence of a short PUCCH resource for a current UE in the resource for data transmission, existence of a long PUCCH resource for the current UE in the resource for data transmission, and inexistence of a short PUCCH resource or a long PUCCH resource for any UE other than the current UE in the resource for data transmission;
indication of existence of a short PUCCH resource and a long PUCCH resource for a current UE in the resource for data transmission, and inexistence of a short PUCCH resource or a long PUCCH resource for any UE other than the current UE in the resource for data transmission;
indication of one or more OFDM symbols unused by the resource for data transmission;
indication of an OFDM symbol at start of the resource for data transmission and/or an OFDM symbol at end of the resource for data transmission;
indication of one or more OFDM symbols unused by the resource for data transmission, and indication of inexistence of a short PUCCH resource or a long PUCCH resource in the resource for data transmission, where the inexistence of the short PUCCH resource or the long PUCCH resource includes: inexistence of a short PUCCH resource or a long PUCCH resource for a current UE, and inexistence of a short PUCCH resource or a long PUCCH resource for any UE other than the current UE;
indication of one or more OFDM symbols unused by the resource for data transmission, and indication of existence of a short PUCCH resource for a current UE in the resource for data transmission, inexistence of a long PUCCH resource for the current UE in the resource for data transmission, and inexistence of a short PUCCH resource or a long PUCCH resource for any UE other than the current UE in the resource for data transmission;
indication of one or more OFDM symbols unused by the resource for data transmission, and indication of inexistence of a short PUCCH resource for a current UE in the resource for data transmission, existence of a long PUCCH resource for the current UE in the resource for data transmission, and inexistence of a short PUCCH resource or a long PUCCH resource for any UE other than the current UE in the resource for data transmission;
indication of one or more OFDM symbols unused by the resource for data transmission, and indication of existence of a short PUCCH resource and a long PUCCH resource for a current UE in the resource for data transmission, and inexistence of a short PUCCH resource or a long PUCCH resource for any UE other than the current UE in the resource for data transmission;
indication of an OFDM symbol at start of the resource for data transmission and/or an OFDM symbol at end of the resource for data transmission, and indication of inexistence of a short PUCCH resource or a long PUCCH resource in the resource for data transmission, where the inexistence of the short PUCCH resource or the long PUCCH resource includes: inexistence of a short PUCCH resource or a long PUCCH resource for a current UE, and inexistence of a short PUCCH resource or a long PUCCH resource for any UE other than the current UE;
indication of an OFDM symbol at start of the resource for data transmission and/or an OFDM symbol at end of the resource for data transmission, and indication of existence of a short PUCCH resource for a current UE in the resource for data transmission, inexistence of a long PUCCH resource for the current UE in the resource for data transmission, and inexistence of a short PUCCH resource or a long PUCCH resource for any UE other than the current UE in the resource for data transmission;
indication of an OFDM symbol at start of the resource for data transmission and/or an OFDM symbol at end of the resource for data transmission, and indication of inexistence of a short PUCCH resource for a current UE in the resource for data transmission, existence of a long PUCCH resource for the current UE in the resource for data transmission, and inexistence of a short PUCCH resource or a long PUCCH resource for any UE other than the current UE in the resource for data transmission; or
indication of an OFDM symbol at start of the resource for data transmission and/or an OFDM symbol at end of the resource for data transmission, and indication of existence of a short PUCCH resource and a long PUCCH resource for a current UE in the resource for data transmission, and inexistence of a short PUCCH resource or a long PUCCH resource for any UE other than the current UE in the resource for data transmission.

Through the method in this embodiment, in an NR system, the base station and the UE can determine an actual transmission PUSCH resource, such that when the PUSCH and the PUCCH are frequency division multiplexed, the base station and the UE can accurately and quickly know the actual transmission PUSCH resource from allocated transmission PUSCH resources, effectively saving system resources, reducing the overhead and improving the indication efficiency.

To further clarify objects of the present disclosure, on the basis of the above-mentioned embodiments, further illustration is given, and the above-mentioned methods are specifically described through following typical examples.

### Example 1

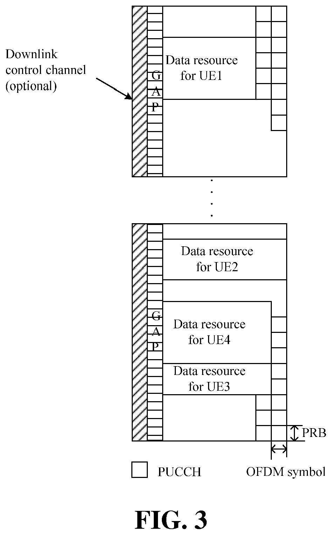

FIG. 3 is a schematic diagram 1 of determination of a transmission PUSCH resource in a slot in embodiments of a method for determining a data transmission resource in the present disclosure. As shown in FIG. 3, in a case that a slot only has a short PUCCH, a base station allocates transmission PUSCH resources (i.e., PRBs) to a UE1, a UE2, a UE 3 and a UE4 respectively, and at the same time, the base station configures short PUCCHs for other UEs in this slot.

For the UE1, the base station can notify PRBs of a PUSCH of the UE1, and indicate that an OFDM symbol at end of the PUSCH of the UE1 is the third-to-last (viewed from right to left in FIG. 3, which is the same hereinafter) OFDM symbol (symbols after the third-to-last OFDM symbol that sends the PUSCH do not send the PUSCH); and the UE1 receives PRBs allocated for PUSCH transmission sent by the base station, receives indication, and determines that in the PRBs for PUSCH transmission, the second-to-last OFDM symbol cannot be used as a PUSCH.

For the UE2, the base station can notify PRBs of a PUSCH of the UE2, and indicate that an OFDM symbol at end of the PUSCH of the UE2 is the last OFDM symbol (symbols after the last OFDM symbol that sends the PUSCH do not send the PUSCH); and the UE2 receives PRBs allocated for PUSCH transmission sent by the base station, receives indication, and determines that in the PRBs for PUSCH transmission, no PUCCH resource exists, that is, all resources are PUSCHs.

For the UE3 and the UE4, the base station can notify PRBs of a PUSCH of each of the UE3 and the UE4, and indicate that an OFDM symbol at end of the PUSCH of the each of the UE3 and UE4 is the second-to-last OFDM symbol (symbols after the second-to-last OFDM symbol that sends the PUSCH do not send the PUSCH); and the UE1 receives PRBs allocated for PUSCH transmission sent by the base station, and receives indication, and the UE3 and the UE4 determine that in the PRBs for PUSCH transmission, the last OFDM symbol cannot be used as a PUSCH. For the UE4, although a frequency domain resource of a PRB corresponding to the last OFDM symbol in PRBs of the PUSCH of the UE4 is wasted, this indication scheduling has small overhead and is easily implemented.

### Example 2

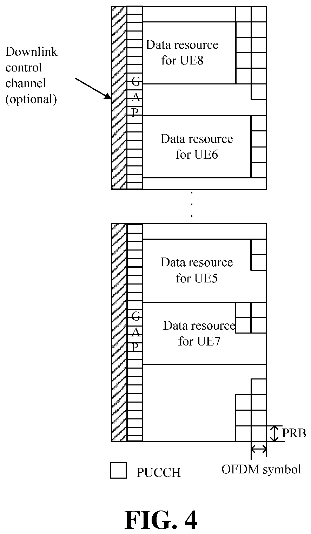

FIG. 4 is a schematic diagram 2 of determination of a transmission PUSCH resource in a slot in an embodiment of a method for determining a data transmission resource in the present disclosure. As shown in FIG. 4, compared with the example 1, a base station in the example 2 allocates PRB resources for PUSCH transmission to UEs 5 to 8, and indicates a situation of PUCCHs in PRBs of the PUSCH.

For the UE5, the base station allocates a resource for PUSCH transmission to the UE5, and indicates that the resource for PUSCH transmission has a short PUCCH of the UE5; the UE5 also needs the base station to notify the number and positions of OFDM symbols of the short PUUCH of the UE5, where the OFDM symbol is the last OFDM symbol in a slot, and PRBs or subcarriers occupied by the short PUCCH of the UE5 can be indicated or agreed; it is the UE5 that has short PUCCH configuration information relative to the UE and can implement the notification of the short PUCCH; and the UE5 receives information of the resource for PUSCH transmission sent by the base station, receives indication, and determines that the short PUCCH of the UE5 is removed from the resource for PUSCH transmission and other resources are for PUSCH transmission. The situation of the UE7 is similar to that of the UE5.

### Example 3

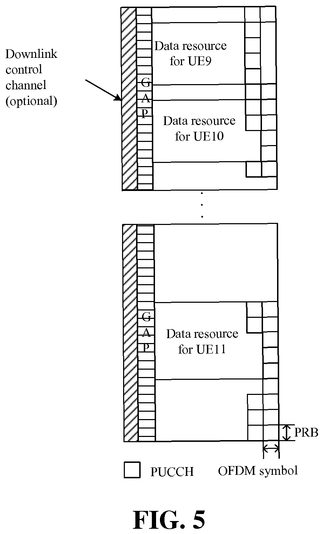

FIG. 5 is a schematic diagram 3 of determination of a transmission PUSCH resource in a slot in embodiments of a method for determining a data transmission resource in the present disclosure. As shown in FIG. 5, compared with the example 1, a base station in the example 3 allocates PRB resources for PUSCH transmission to UEs 9 to 11, and indicates a situation of PUCCHs in PRBs of the PUSCH.

The base station allocates PRBs for PUSCH transmission to the UE9, and indicates the second-to-last (viewed from right to left in FIG. 5, which is the same hereinafter) OFDM symbol is not used by the PUSCH. The base station receives PUSCH data of the UE9 in any OFDM symbol other than the second-to-last OFDM symbol in the PRBs; the UE9 receives PRB information allocated for PUSCH transmission sent by the base station, receives indication, and determines that the second-to-last OFDM symbol in the PRBs is not used for PUSCH transmission; a data resource for the UE9 includes the last OFDM symbol, and the second-to-last OFDM symbol is used for controlling other UEs or the UE9; and in addition, when the UE9 or the base station supports multi-radio frequency link, the UE9 can also use the second-to-last OFDM symbol as data.

The base station allocates PRBs for PUSCH transmission to the UE10, and indicates that an OFDM symbol at end of the PUSCH is the second-to-last OFDM symbol (symbols after this OFDM symbol do not send the PUSCH); and the PUSCH includes a short PUCCH of the UE10, that is, in PRBs for PUSCH transmission allocated to the UE10, the last OFDM symbol is removed, and remaining PRB resources also include short PUCCH resources of the UE10. The UE10 receives PRB allocation information for PUSCH transmission sent by the base station, receives indication, and determines that after the last symbol is removed from the PRBs, the remaining PRB resources also include short PUCCH resources of the UE10, and the UE10 sends data in an actual PUSCH resource. Resources occupied by the short PUCCH of the UE10 are notified or agreed by the base station.

For the UE10, the base station can also allocate PRBs for PUSHC transmission to the UE10 and indicate that a symbol at end of the PUSCH is the second-to-last OFDM symbol (symbols after this OFDM symbol do not send the PUSCH), and the PRBs of the PUSCH include short PUCCHs of other UEs; and at this point, the UE 10 needs to acquire a resource range of short PUCCHs of other UEs in a slot (e.g., in a manner 1, the base station notifies or broadcasts an allocation situation or a range of short PUCCHs of other UEs in a slot). The base station also determines that the last OFDM symbol in the PRBs of the PUSCH does not transmit the PUSCH, and first two PRBs in the PRBs of the PUSCH do not send the PUSCH in the second-to-last OFDM symbol; the UE10 receives resource information of a PUSCH sent by the base station, receives indication, and determines a resource actually used for PUSCH transmission in the PRBs in conjunction with allocation of short PUCCH resources of other UEs notified or broadcasted by the base station; and a data resource for the UE10 does not include the last OFDM symbol, and the second-to-last OFDM symbol includes uplink control of other UEs and data of the UE10.

The base station allocates PRBs for PUSCH transmission to the UE11 and indicates that an OFDM symbol at end of the PUSCH is the second-to-last OFDM symbol (symbols after this OFDM symbol do not send the PUSCH), and the PUSCH includes a short PUCCH of the UE11, that is, in the PRBs for PUSCH transmission allocated to the UE11, the last OFDM symbol is removed, and remaining PRB resources also include short PUCCH resources of the UE11; the UE11 receives allocation information of PRBs for PUSCH transmission sent by the base station, receives indication, and determines that after the last OFDM symbol is removed from the PRBs, remaining PRB resources also include short PUCCH resources for the UE 11, and then the UE11 sends data via an actual PUSCH resource; resources occupied by the short PUCCH of the UE11 are notified or agreed by the base station; and a data resource for the UE11 does not include the last OFDM symbol, and the second-to-last OFDM symbol includes uplink control of the UE11.

### Example 4

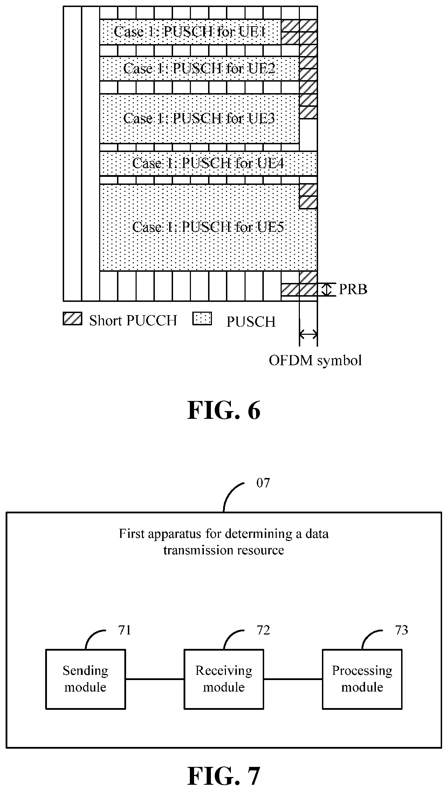

FIG. 6 is a schematic diagram 4 of determination of a transmission PUSCH resource in a slot in an embodiment of a method for determining a data transmission resource in the present disclosure. As shown in FIG. 6, several possible situations where symbols of a PUSCH are extended to a short PUCCH area are given in FIG.6.

Corresponding to Case 1: PUSCH for UE1, the PUSCH of the UE1 is not extended to a short PUCCH area (assuming that the short PUCCH area has two OFDM symbols at end of a slot), a position of an end OFDM symbol of the PUSCH of the UE1 should be indicated by signaling as the UE1 (the base station configures indication signaling and sends the indication signaling to the UE1, and the UE1 receives the indication signaling sent by the base station and acquires the position of the end OFDM symbol of the PUSCH), and at the same time, the PUSCH indicating the UE1 does not include short PUCCH resources of the UE1 (the base station configures indication signaling and sends the indication signaling to the UE1, and the UE1 receives the indication signaling sent by the base station and acquires that the PUSCH resource does not include a short PUCCH of the UE1).

Corresponding to Case 2: PUSCH for UE2, a PUSCH of the UE2 is extended to a first symbol of the short PUCCH area (assuming that the short PUCCH area has two OFDM symbols at end of a slot), a position of an end OFDM symbol of the PUSCH of the UE2 should be indicated by signaling as the UE2, and at the same time, the PUSCH indicating the UE2 does not include short PUCH resources of the UE2.

Corresponding to Case 3: PUSCH for UE3, a PUSCH of the UE3 is extended to a first OFDM symbol of the short PUCCH area (assuming that the short PUCCH area has two OFDM symbols at end of a slot), a position of an end OFDM symbol of the PUSCH of the UE3 should be indicated by signaling as the UE3, and at the same time, the PUSCH indicating the UE3 does not include short PUCH resources of the UE3.

Corresponding to Case 4: PUSCH for UE4, a PUSCH of the UE4 is extended to a second symbol of the short PUCCH area (assuming that the short PUCCH area has two OFDM symbols at end of a slot), and a position of an end OFDM symbol of the PUSCH of the UE4 should be indicated by signaling as the UE4. At the same time, the PUSCH indicating the UE4 does not include short PUCCH resources of the UE4.

Corresponding to Case 5: PUSCH for UE5, a PUSCH of the UE5 is extended to a second symbol of the short PUCCH area (assuming that the short PUCCH area has two OFDM symbols at end of a slot), and a position of an end OFDM symbol of the PUSCH of the UE5 should be indicated by signaling as the UE5. At the same time, the PUSCH indicating the UE4 does not include short PUCCH resources of the UE5.

It is to be noted that in the Case 3, short PUCCHs of other UEs are allocated in the last OFDM symbol of the short PUCCH area, and if the PUSCH of the UE3 wants to be extended to the last symbol in the short PUCCH area, the base station needs to further indicate resources specifically used by the PUSCH of the UE3 in the last OFDM symbol in the short PUCCH area (or to provide some information to enable the UE3 to acquire resources specifically used by the PUSCH in the last OFDM symbol in the short PUCCH area).

For the Case 5, the UE5 needs new UE behavior described below.

After the UE5 receives indication information of the end OFDM symbol of the PUSCH, if the end OFDM symbol is extended to the short PUCCH area, the UE5 needs to check whether PUSCH resources of the UE5 include a short PUCCH of the UE5, and if the PUSCH resources include the short PUCCH, the UE5 needs to remove the short PUCCH from PUSCH resources of the UE5, and remaining resources are resources actually used for PUSCH transmission (if the short PUCCH is not removed, the UE5 may also directly send the PUSCH, and at this point, resources occupied by the short PUCCH can be rate matched and punctured, that is, corresponding PUSCH data is removed on the resources occupied by the short PUCH).

In order to support the above-mentioned five cases, the end OFDM symbol of the PUSCH should be clearly indicated through dynamitic signaling. In addition, if the end OFDM symbol of the PUSCH is extended to the short PUCCH area, the UE should check whether PUSCH resources include a short PUCCH of the UE, and if the PUSCH resources include the short PUCCH, the UE should remove the short PUCCH from the PUSCH resources.

From the above-mentioned example, the following can be obtained.

The end OFDM symbol of the PUSCH should be clearly indicated by signaling, and for example, the end OFDM symbol may be indicated though physical layer signaling or high layer signaling or uplink grant information.

At the same time, one of following three manners may also be selected.

In the selection 1, the base station always indicates whether the PUSCH of the UE includes a long PUCCH and/or a short PUCCH of the UE, and if the PUSCH includes the long PUCCH and/or the short PUCCH, the UE checks and deletes the long PUCCH and/or the short PUCCH of the UE from PUSCH resources, and remaining resources are used for transmitting the PUSCH of the UE.

In the selection 2, the UE always assumes that PUSCH resources do not include a long PUCCH and/or a short PUCCH of the UE, and if clear signaling indication received by the UE indicates that the PUSCH includes the long PUCCH and/or the short PUCCH of the UE, the UE checks and deletes the long PUCCH and/or the short PUCCH of the UE from PUSCH resources, and remaining resources are used for transmitting the PUSCH of the UE.

In the selection 3, the UE always assumes that PUSCH resources include a long PUCCH and/or a short PUCCH of the UE, the UE always performs the operation of checking whether PUSCH resources include the long PUCCH and/or the short PUCCH of the UE, and if the PUSCH resources include the long PUCCH and/or the short PUCCH of the UE, the UE deletes the long PUCCH and/or the short PUCCH of the UE from the PUSCH resources, and remaining resources are used for transmitting the PUSCH of the UE (that is, the UE always assumes that the PUSCH resources include the long PUCCH and/or the short PUCCH of the UE, and the UE always performs necessary check and deduction to obtain the resource actually used for PUSCH transmission).

From the above-mentioned examples, in order to fully re-use remaining resources of the short PUCCH area, two possible methods can be adopted.

In a method 1, the base station indicates to the UE an end OFDM symbol of PUSCH resources allocated to the UE, and then there are two sub-options to choose.
1) The UE receives one indication, this indication is used for notifying the UE whether the PUSCH resources of the UE include a PUCCH (a long PUCCH and/or a short PUCCH) of the UE, and if the PUSCH resources of the UE include the PUCCH of the UE, the UE needs to remove a PUCCH resource for the UE from the PUSCH resources of the UE and transmits data via remaining PUSCH resources.
2) Alternatively, the UE always assumes that the PUSCH resources allocated by the base station to the UE include a PUCCH of the UE, and the UE always checks and deduces a resource actually used for data transmission in the allocated PUSCH resources; and a specific process is that the UE checks whether the PUSCH resources allocated by the base station to the UE include a PUCCH resource for the UE, and if the PUSCH resources include the PUCCH resource for the UE, the UE performs processing in accordance with 1), and if the PUSCH resources do not include the PUCCH resource for the UE, the UE considers that the allocated PUSCH resources are for data transmission.

In a method 2, the UE always assumes that PUSCH resources allocated by the base station to the UE include a PUCCH (a PUCCH of the UE or a PUCCH of any of other UEs), and the UE checks whether the PUSCH resources allocated by the base station to the UE include the PUCCH: if the PUSCH resources include the PUCCH, the UE performs processing in accordance with 1), and if the PUSCH resources do not include the PUCCH, the UE considers that the allocated PUSCH resources are for data transmission; specifically, in the above-mentioned check process, the UE needs to acquire which resources in those resources in a slot are for the PUCCH; and the UE can receive allocation information of PUCCH resources in a slot broadcasted or sent in a point-to-point manner by the base station to acquire which resources in the slot have the PUCCH, then perform check and determination in conjunction with the PUCCH resource for the UE, and remove part of the PUSCH resources of the UE that conflict with the PUCCH resource for the UE, and the remaining resources are used for data transmission.

FIG. 7 is a structural diagram of a first apparatus for determining a data transmission resource in the present disclosure. As shown in FIG. 7, the first apparatus 07 for determining a data transmission resource provided by the embodiments of the present disclosure includes a sending module 71.

The sending module 71 is configured to send PUSCH resource information and indication information.

The PUCCH resource information includes information used for indicating a resource allocated for data transmission of a UE in a PUSCH, and the indication information is used for indicating whether the resource for data transmission includes a PUCCH resource, and/or the indication information is used for indicating a resource actually used for data transmission in the resource for data transmission, and/or the indication information is used for indicating whether rate matching is required for the resource for data transmission to remove a resource occupied by a PUCCH.

In this embodiment, the first apparatus further includes a receiving module 72 and a processing module 73.

The receiving module 72 is configured to receive data sent by the UE in the resource for data transmission.

The processing module 73 is configured to determine the resource actually used for data transmission according to the indication information, and parse the data.

In this embodiment, when the PUCCH resource is a short PUCCH resource, the indication information includes at least one of the followings:
indication of inexistence of a short PUCCH resource in the resource for data transmission, where the inexistence of the short PUCCH resource includes: inexistence of a short PUCCH resource for a current UE, and/or inexistence of a short PUCCH resource for any UE other than the current UE;
indication of existence of a short PUCCH resource for a current UE in the resource for data transmission;
indication of one or more OFDM symbols unused by the resource for data transmission;
indication of an OFDM symbol at start of the resource for data transmission and/or an OFDM symbol at end of the resource for data transmission;
indication of one or more OFDM symbols unused by the resource for data transmission, and indication of inexistence of a short PUCCH resource in the resource for data transmission, where the inexistence of the short PUCCH resource includes: inexistence of a short PUCCH resource for a current UE, and inexistence of a short PUCCH resource for any UE other than the current UE;
indication of one or more OFDM symbols unused by the resource for data transmission, and indication of existence of a short PUCCH resource for the first terminal in the resource for data transmission;
indication of an OFDM symbol at start of the resource for data transmission and/or an OFDM symbol at end of the resource for data transmission, and indication of inexistence of a short PUCCH resource in the resource for data transmission, where the inexistence of the short PUCCH resource includes: inexistence of a short PUCCH resource for a current UE, and inexistence of a short PUCCH resource for any UE other than the current UE; or
indication of an OFDM symbol at start of the resource for data transmission and/or an OFDM symbol at end of the resource for data transmission, and indication of existence of a short PUCCH resource for a current UE in the resource for data transmission.

In this embodiment, when the PUCCH resource is a long PUCCH resource, the indication information includes at least one of the followings:
indication of inexistence of a long PUCCH resource in the resource for data transmission, where the inexistence of the long PUCCH resource includes: inexistence of a long PUCCH resource for a current UE, and/or inexistence of a long PUCCH resource for any UE other than the current UE;
indication of existence of a long PUCCH resource for a current UE in the resource for data transmission;
indication of one or more OFDM symbols unused by the resource for data transmission;
indication of an OFDM symbol at start of the resource for data transmission and/or an OFDM symbol at end of the resource for data transmission;
indication of one or more OFDM symbols unused by the resource for data transmission, and indication of inexistence of a long PUCCH resource in the resource for data transmission, where the inexistence of the long PUCCH resource includes: inexistence of a long PUCCH resource for a current UE, and inexistence of a long PUCCH resource for any UE other than the current UE;
indication of one or more OFDM symbols unused by the resource for data transmission, and indication of existence of a long PUCCH resource for a current UE in the resource for data transmission;
indication of an OFDM symbol at start of the resource for data transmission and/or an OFDM symbol at end of the resource for data transmission, and indication of inexistence of a long PUCCH resource in the resource for data transmission, where the inexistence of the long PUCCH resource includes: inexistence of a long PUCCH resource for a current UE, and/or inexistence of a long PUCCH resource for any UE other than the current UE; or
indication of an OFDM symbol at start of the resource for data transmission and/or an OFDM symbol at end of the resource for data transmission, and indication of existence of a long PUCCH resource for a current UE in the resource for data transmission.

In this embodiment, when the PUCCH resource is a combination of a short PUCCH resource and a long PUCCH resource, the indication information includes at least one of the followings:
indication of inexistence of a short PUCCH resource or a long PUCCH resource in the resource for data transmission, where the inexistence of the short PUCCH resource or the long PUCCH resource includes: inexistence of a short PUCCH resource or a long PUCCH resource for a current UE, and inexistence of a short PUCCH resource or a long PUCCH resource for any UE other than the current UE;
indication of existence of a short PUCCH resource for a current UE in the resource for data transmission, inexistence of a long PUCCH resource for the current UE in the resource for data transmission, and inexistence of a short PUCCH resource or a long PUCCH resource for any UE other than the current UE in the resource for data transmission;
indication of inexistence of a short PUCCH resource for a current UE in the resource for data transmission, existence of a long PUCCH resource for the current UE in the resource for data transmission, and inexistence of a short PUCCH resource or a long PUCCH resource for any UE other than the current UE in the resource for data transmission;
indication of existence of a short PUCCH resource and a long PUCCH resource for a current UE in the resource for data transmission, and inexistence of a short PUCCH resource or a long PUCCH resource for any UE other than the current UE in the resource for data transmission;
indication of one or more OFDM symbols unused by the resource for data transmission;
indication of an OFDM symbol at start of the resource for data transmission and/or an OFDM symbol at end of the resource for data transmission;
indication of one or more OFDM symbols unused by the resource for data transmission, and indication of inexistence of a short PUCCH resource or a long PUCCH resource in the resource for data transmission, where the inexistence of the short PUCCH resource or the long PUCCH resource includes: inexistence of a short PUCCH resource or a long PUCCH resource for a current UE, and inexistence of a short PUCCH resource or a long PUCCH resource for any UE other than the current UE;
indication of one or more OFDM symbols unused by the resource for data transmission, and indication of existence of a short PUCCH resource for a current UE in the resource for data transmission, inexistence of a long PUCCH resource for the current UE in the resource for data transmission, and inexistence of a short PUCCH resource or a long PUCCH resource for any UE other than the current UE in the resource for data transmission;
indication of one or more OFDM symbols unused by the resource for data transmission, and indication of inexistence of a short PUCCH resource for a current UE in the resource for data transmission, existence of a long PUCCH resource for the current UE in the resource for data transmission, and inexistence of a short PUCCH resource or a long PUCCH resource for any UE other than the current UE in the resource for data transmission;
indication of one or more OFDM symbols unused by the resource for data transmission, and indication of existence of a short PUCCH resource and a long PUCCH resource for a current UE in the resource for data transmission, and inexistence of a short PUCCH resource or a long PUCCH resource for any UE other than the current UE in the resource for data transmission;
indication of an OFDM symbol at start of the resource for data transmission and/or an OFDM symbol at end of the resource for data transmission, and indication of inexistence of a short PUCCH resource or a long PUCCH resource in the resource for data transmission, where the inexistence of the short PUCCH resource or the long PUCCH resource includes: inexistence of a short PUCCH resource or a long PUCCH resource for a current UE, and inexistence of a short PUCCH resource or a long PUCCH resource for any UE other than the current UE;
indication of an OFDM symbol at start of the resource for data transmission and/or an OFDM symbol at end of the resource for data transmission, and indication of existence of a short PUCCH resource for a current UE in the resource for data transmission, inexistence of a long PUCCH resource for the current UE in the resource for data transmission, and inexistence of a short PUCCH resource or a long PUCCH resource for any UE other than the current UE in the resource for data transmission;
indication of an OFDM symbol at start of the resource for data transmission and/or an OFDM symbol at end of the resource for data transmission, and indication of inexistence of a short PUCCH resource for a current UE in the resource for data transmission, existence of a long PUCCH resource for the current UE in the resource for data transmission, and inexistence of a short PUCCH resource or a long PUCCH resource for any UE other than the current UE in the resource for data transmission; or
indication of an OFDM symbol at start of the resource for data transmission and/or an OFDM symbol at end of the resource for data transmission, and indication of existence of a short PUCCH resource and a long PUCCH resource for a current UE in the resource for data transmission, and inexistence of a short PUCCH resource or a long PUCCH resource for any UE other than the current UE in the resource for data transmission.

The apparatus in this embodiment can be used for executing the technical solutions of the above-mentioned method embodiments. The implementation principle and technical effects are similar and thus will not be repeated herein.

In practical applications, the sending module 71, the receiving module 72 and the processing module 73 may all be implemented by a central processing unit (CPU), a micro processor unit (MPU), a digital signal processor (DSP) or a field programmable gate array (FPGA) located in the first apparatus 07 for determining a data transmission resource.

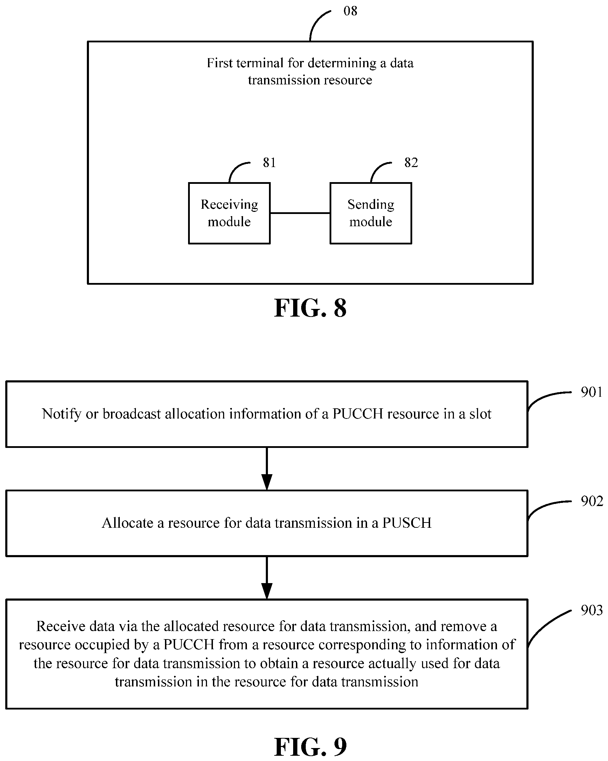

FIG. 8 is a structural diagram of a first terminal for determining a data transmission resource in the present disclosure. As shown in FIG. 8, the first terminal 08 for determining a data transmission resource provided by the embodiments of the present disclosure includes a receiving module 81.

The receiving module 81 is configured to receive PUSCH information and indication information sent by a base station.

The PUCCH resource information includes information used for indicating a resource allocated by the base station in a PUSCH, and the indication information is used for indicating whether the resource for data transmission includes a PUCCH resource, and/or the indication information is used for indicating a resource actually used for data transmission in the resource for data transmission, and/or the indication information is used for indicating whether rate matching is required for the resource for data transmission to remove a resource occupied by a PUCCH.

In this embodiment, the first terminal 08 further includes a sending module 82.

The sending module 82 is configured to send data to the base station in the resource actually used for data transmission.

In this embodiment, when the PUCCH resource is a short PUCCH resource, the indication information includes at least one of the followings:
indication of inexistence of a short PUCCH resource in the resource for data transmission, where the inexistence of the short PUCCH resource includes: inexistence of a short PUCCH resource for a current UE, and inexistence of a short PUCCH resource for any UE other than the current UE;
indication of existence of a short PUCCH resource for a current UE in the resource for data transmission;
indication of one or more OFDM symbols unused by the resource for data transmission;
indication of an OFDM symbol at start of the resource for data transmission and/or an OFDM symbol at end of the resource for data transmission;
indication of one or more OFDM symbols unused by the resource for data transmission, and indication of inexistence of a short PUCCH resource in the resource for data transmission, where the inexistence of the short PUCCH resource includes: inexistence of a short PUCCH resource for a current UE, and inexistence of a short PUCCH resource for any UE other than the current UE;
indication of one or more OFDM symbols unused by the resource for data transmission, and indication of existence of a short PUCCH resource for the first terminal in the resource for data transmission;
indication of an OFDM symbol at start of the resource for data transmission and/or an OFDM symbol at end of the resource for data transmission, and indication of inexistence of a short PUCCH resource in the resource for data transmission, where the inexistence of the short PUCCH resource includes: inexistence of a short PUCCH resource for a current UE, and inexistence of a short PUCCH resource for any UE other than the current UE; or
indication of an OFDM symbol at start of the resource for data transmission and/or an OFDM symbol at end of the resource for data transmission, and indication of existence of a short PUCCH resource for a current UE in the resource for data transmission.

In this embodiment, when the PUCCH resource is a long PUCCH resource, the indication information includes at least one of the followings:
indication of inexistence of a long PUCCH resource in the resource for data transmission, where the inexistence of the long PUCCH resource includes: inexistence of a long PUCCH resource for a current UE, and/or inexistence of a long PUCCH resource for any UE other than the current UE;
indication of existence of a long PUCCH resource for a current UE in the resource for data transmission;
indication of one or more OFDM symbols unused by the resource for data transmission;
indication of an OFDM symbol at start of the resource for data transmission and/or an OFDM symbol at end of the resource for data transmission;
indication of one or more OFDM symbols unused by the resource for data transmission, and indication of inexistence of a long PUCCH resource in the resource for data transmission, where the inexistence of the long PUCCH resource includes: inexistence of a long PUCCH resource for a current UE, and/or inexistence of a long PUCCH resource for any UE other than the current UE;
indication of one or more OFDM symbols unused by the resource for data transmission, and indication of existence of a long PUCCH resource for a current UE in the resource for data transmission;
indication of an OFDM symbol at start of the resource for data transmission and/or an OFDM symbol at end of the resource for data transmission, and indication of inexistence of a long PUCCH resource in the resource for data transmission, where the inexistence of the long PUCCH resource includes: inexistence of a long PUCCH resource for a current UE, and inexistence of a long PUCCH resource for any UE other than the current UE; or
indication of an OFDM symbol at start of the resource for data transmission and/or an OFDM symbol at end of the resource for data transmission, and indication of existence of a long PUCCH resource for a current UE in the resource for data transmission.

In this embodiment, when the PUCCH resource is a combination of a short PUCCH resource and a long PUCCH resource, the indication information includes at least one of the followings:
indication of inexistence of a short PUCCH resource or a long PUCCH resource in the resource for data transmission, where the inexistence of the short PUCCH resource or the long PUCCH resource includes: inexistence of a short PUCCH resource or a long PUCCH resource for a current UE, and inexistence of a short PUCCH resource or a long PUCCH resource for any UE other than the current UE;
indication of existence of a short PUCCH resource for a current UE in the resource for data transmission, inexistence of a long PUCCH resource for the current UE in the resource for data transmission, and inexistence of a short PUCCH resource or a long PUCCH resource for any UE other than the current UE in the resource for data transmission;
indication of inexistence of a short PUCCH resource for a current UE in the resource for data transmission, existence of a long PUCCH resource for the current UE in the resource for data transmission, and inexistence of a short PUCCH resource or a long PUCCH resource for any UE other than the current UE in the resource for data transmission;
indication of existence of a short PUCCH resource and a long PUCCH resource for a current UE in the resource for data transmission, and inexistence of a short PUCCH resource or a long PUCCH resource for any UE other than the current UE in the resource for data transmission;
indication of one or more OFDM symbols unused by the resource for data transmission;
indication of an OFDM symbol at start of the resource for data transmission and/or an OFDM symbol at end of the resource for data transmission;
indication of one or more OFDM symbols unused by the resource for data transmission, and indication of inexistence of a short PUCCH resource or a long PUCCH resource in the resource for data transmission, where the inexistence of the short PUCCH resource or the long PUCCH resource includes: inexistence of a short PUCCH resource or a long PUCCH resource for a current UE, and inexistence of a short PUCCH resource or a long PUCCH resource for any UE other than the current UE;
indication of one or more OFDM symbols unused by the resource for data transmission, and indication of existence of a short PUCCH resource for a current UE in the resource for data transmission, inexistence of a long PUCCH resource for the current UE in the resource for data transmission, and inexistence of a short PUCCH resource or a long PUCCH resource for any UE other than the current UE in the resource for data transmission;
indication of one or more OFDM symbols unused by the resource for data transmission, and indication of inexistence of a short PUCCH resource for a current UE in the resource for data transmission, existence of a long PUCCH resource for the current UE in the resource for data transmission, and inexistence of a short PUCCH resource or a long PUCCH resource for any UE other than the current UE in the resource for data transmission;
indication of one or more OFDM symbols unused by the resource for data transmission, and indication of existence of a short PUCCH resource and a long PUCCH resource for a current UE in the resource for data transmission, and inexistence of a short PUCCH resource or a long PUCCH resource for any UE other than the current UE in the resource for data transmission;
indication of an OFDM symbol at start of the resource for data transmission and/or an OFDM symbol at end of the resource for data transmission, and indication of inexistence of a short PUCCH resource or a long PUCCH resource in the resource for data transmission, where the inexistence of the short PUCCH resource or the long PUCCH resource includes: inexistence of a short PUCCH resource or a long PUCCH resource for a current UE, and inexistence of a short PUCCH resource or a long PUCCH resource for any UE other than the current UE;
indication of an OFDM symbol at start of the resource for data transmission and/or an OFDM symbol at end of the resource for data transmission, and indication of existence of a short PUCCH resource for a current UE in the resource for data transmission, inexistence of a long PUCCH resource for the current UE in the resource for data transmission, and inexistence of a short PUCCH resource or a long PUCCH resource for any UE other than the current UE in the resource for data transmission;
indication of an OFDM symbol at start of the resource for data transmission and/or an OFDM symbol at end of the resource for data transmission, and indication of inexistence of a short PUCCH resource for a current UE in the resource for data transmission, existence of a long PUCCH resource for the current UE in the resource for data transmission, and inexistence of a short PUCCH resource or a long PUCCH resource for any UE other than the current UE in the resource for data transmission; or
indication of an OFDM symbol at start of the resource for data transmission and/or an OFDM symbol at end of the resource for data transmission, and indication of existence of a short PUCCH resource and a long PUCCH resource for a current UE in the resource for data transmission, and inexistence of a short PUCCH resource or a long PUCCH resource for any UE other than the current UE in the resource for data transmission.

The terminal in this embodiment can be used for executing the technical solutions of the above-mentioned method embodiments. The implementation principle and technical effects are similar and thus will not be repeated herein.

In practical applications, the receiving module 81 and the sending module 82 may both be implemented by a CPU, an MPU, a DSP or an FPGA located in the first terminal 08 for determining a data transmission resource.

FIG. 9 is a flowchart of an embodiment 3 of a method for determining a data transmission resource in the present disclosure. As shown in FIG. 3, this method is applied to a base station side, and the main idea is that a base station notifies or broadcasts allocation information of a PUCCH resource for a UE in a slot, allocates a resource for data transmission in a PUSCH, and receives data sent by the UE according to the resource for data transmission, where the base station removes a resource occupied by a PUCCH from the allocated resource for data transmission to obtain a resource actually used for data transmission in the resource for data transmission.

This method includes steps described below.

In step 901, allocation information of a PUCCH resource in a slot is notified or broadcasted.

The base station notifies or broadcasts allocation information of a PUCCH resource for a UE in one or more slots. The UE herein may be a current UE or any UE other than the current UE. The PUCCH resource may include any one of following: a short PUCCH resource, a long PUCCH resource, and a short PUCCH resource and a long PUCCH resource.

In step 902, a resource for data transmission is allocated in a PUSCH.

In step 903, data is received via the allocated resource for data transmission, and a resource occupied by a PUCCH is removed from a resource corresponding to information of the resource for data transmission to obtain a resource actually used for data transmission in the resource for data transmission.

In this embodiment, the step in which the allocation information of the PUCCH resource in the slot is notified or broadcasted includes at least one of the followings.

A PUCCH resource range for all UEs in the slot is notified or broadcasted.

A PUCCH resource range in the slot is notified or broadcasted.

A PUCCH resource range configured semi-statically in the slot is notified or broadcasted.

A PUCCH resource range for other UEs in the slot is notified or broadcasted, where the other UEs are UEs other than the UE with the allocated resource for data transmission.

In this embodiment, the PUCCH resource includes one of the followings:
a short PUCCH resource;
a long PUCCH resource; or
a short PUCCH resource and a long PUCCH resource.

In this embodiment, the step in which the resource occupied by the PUCCH is removed from the resource corresponding to the information of the resource for data transmission includes a step described below.

When the resource for data transmission includes part or all of the notified or broadcasted PUCCH resource in the slot, the part or all of the PUCCH resource is removed from the resource corresponding to information of the resource for data transmission.

The resource occupied by the PUCCH includes at least one of the following: part of OFDM symbols, part of PRBs, part of subcarriers or part of combinations, where the part of combinations include any combination of the part of OFDM symbols, the part of PRBs and the part of subcarriers.

In this embodiment, after the resource for data transmission is allocated in the PUSCH, the method further includes a step described below.

Resource indication information is sent, where the resource indication information is used for indicating whether the resource for data transmission includes a PUCCH resource.

In this embodiment, the resource indication information and the resource corresponding to information of the resource for data transmission are sent in the same uplink grant information.

In this embodiment, after the resource for data transmission is allocated in the PUSCH, the method further includes a step described below.

When a UE has a PUSCH and a PUCCH to be transmitted in a same slot, that a PUCCH resource for the UE is located in a resource for data transmission for the UE is agreed, and the PUCCH resource occupied by the UE is agreed.

In this embodiment, the step in which the allocation information of the PUCCH resource in the slot is notified or broadcasted includes a step described below.

The allocation information of the PUCCH resource in the slot is notified or broadcasted in a transmission manner, where the transmission manner includes a cell transmission manner and a beam transmission manner.

Through the method in this embodiment, in an NR system, the base station and the UE can determine an actual transmission PUSCH resource, such that when the PUSCH and the PUCCH are frequency division multiplexed, the base station and the UE can accurately and quickly know the actual transmission PUSCH resource from allocated transmission PUSCH resources, effectively saving system resources, reducing the overhead and improving the indication efficiency.

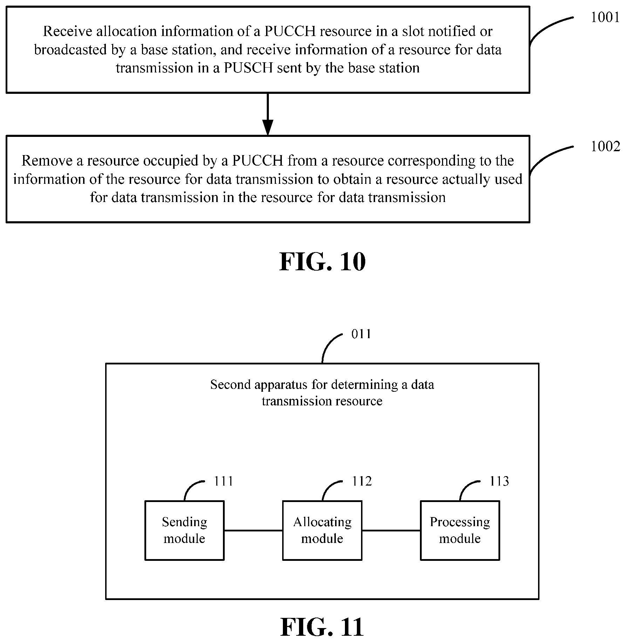

FIG. 10 is a flowchart of an embodiment 4 of a method for determining a data transmission resource in the present disclosure. As shown in FIG. 10, this method is applied to a UE side, and the main idea is that a UE receives allocation information of a PUCCH resource in a slot notified or broadcasted by a base station, receives a resource for data transmission sent by the base station and allocated in a PUSCH, and removes a resource occupied by a PUCCH from the allocated resource for data transmission to obtain a resource actually used for data transmission in the resource for data transmission.

The method includes steps described below.

In step 1001, allocation information of a PUCCH resource in a slot notified or broadcasted by a base station is received, and information of a resource for data transmission in a PUSCH sent by the base station is received.

The UE receives allocation information of a PUCCH resource in one or more slots notified or broadcasted by the base station, and receives information of a resource for data transmission sent by the base station and allocated in the PUSCH. The PUCCH resource may include any one of following: a short PUCCH resource, a long PUCCH resource, and a short PUCCH resource and a long PUCCH resource.

In step 1002, a resource occupied by a PUCCH is removed from a resource corresponding to the information of the resource for data transmission to obtain a resource actually used for data transmission in the resource for data transmission.

In this embodiment, the method further includes a step described below.

Data is sent to the base station in the resource which is actually transmitting data.

In this embodiment, the step in which the allocation information of the PUCCH resource in the slot is notified or broadcasted includes at least one of the followings.

A PUCCH resource range for all UEs in the slot is notified or broadcasted.

A PUCCH resource range in the slot is notified or broadcasted.

A PUCCH resource range configured semi-statically in the slot is notified or broadcasted.

A PUCCH resource range for other UEs in the slot is notified or broadcasted, where the other UEs are UEs other than the UE with the allocated resource for data transmission.

In this embodiment, the PUCCH resource includes one of the followings:
a short PUCCH resource;
a long PUCCH resource; or
a short PUCCH resource and a long PUCCH resource.

In this embodiment, the step in which the resource occupied by the PUCCH is removed from the resource corresponding to the information of the resource for data transmission includes a step described below.

When the resource for data transmission includes part or all of the notified or broadcasted PUCCH resource in the slot, the part or all of the PUCCH resource is removed from the resource corresponding to information of the resource for data transmission.

The resource occupied by the PUCCH includes at least one of the following: part of OFDM symbols, part of PRBs, part of subcarriers or part of combinations, where the part of combinations include any combination of the part of OFDM symbols, the part of PRBs and the part of subcarriers.

In this embodiment, after the information of the resource for data transmission in the PUSCH sent by the base station is received, the method further includes a step described below.

Resource indication information sent by the base station is received, where the resource indication information is used for indicating whether the resource for data transmission allocated by the base station in the PUSCH includes a PUCCH resource; or resource indication information sent by the base station is received, where the resource indication information is used for indicating whether rate matching is required for the resource for data transmission allocated by the base station in the PUSCH to remove the resource occupied by the PUCCH.

In this embodiment, the step in which the resource occupied by the PUCCH is removed from the resource corresponding to the information of the resource for data transmission includes a step described below.

When the resource indication information indicates that the resource for data transmission allocated by the base station in the PUSCH includes the PUCCH resource, the resource occupied by the PUCCH is removed from the resource corresponding to information of the resource for data transmission.

In this embodiment, the method further includes a step described below.

When the resource indication information indicates that the resource for data transmission allocated by the base station in the PUSCH does not include the PUCCH resource, the resource occupied by the PUCCH is not removed from the resource corresponding to information of the resource for data transmission.

In this embodiment, the resource indication information and the resource corresponding to information of the resource for data transmission are received in the same uplink grant information.

In this embodiment, after the allocation information of a PUCCH resource in a slot notified or broadcasted by a base station is received, the method further includes a step described below.

When a PUSCH and a PUCCH need to be transmitted in a same slot, that a PUCCH resource for a UE is located in a resource for data transmission for the UE is agreed with the base station, and the PUCCH resource occupied by the UE is agreed with the base station.

In this embodiment, the step in which the allocation information of the PUCCH resource in the slot notified or broadcasted by the base station is received includes a step described below.

The allocation information of the PUCCH resource in the slot notified or broadcasted by the base station is received in a transmission manner, where the transmission manner includes a cell transmission manner and a beam transmission manner.

Through the method in this embodiment, in an NR system, the base station and the UE can determine an actual transmission PUSCH resource, such that when the PUSCH and the PUCCH are frequency division multiplexed, the base station and the UE can accurately and quickly know the actual transmission PUSCH resource from allocated transmission PUSCH resources, effectively saving system resources, reducing the overhead and improving the indication efficiency.

To further clarify objects of the present disclosure, on the basis of the above-mentioned embodiments, further illustration is given, and the above-mentioned methods are specifically described through following typical examples.

### Example 5

A base station notifies or broadcasts allocation information of a short PUCCH resource for a UE (the UE itself or other UEs) in one or more slots (or referred to as a scheduling unit); or a base station notifies or broadcasts a PUCCH resource allocation range of a UE (the UE itself or other UEs) in one or more slots (or referred to as a scheduling unit). A short PUCCH generally occupies one or two OFDM symbols, and is generally located at end of the slot or before uplink data. A long PUCCH generally occupies more OFDM symbols, such as four OFDM symbols at least.

For example, the base station can notify or broadcast a range of PRBs occupied by other UEs included in the slot as well as positions and/or numbers of OFDM symbols of a PUCCH to a related UE. The PUCCH, especially, is referred to as a PUCCH sent by a UE having only a PUCCH (the UE has no PUSCH to be sent in a slot), such that ranges of PUCCHs of other UEs in the slot can be determined, such as information of occupied PRBs or subcarriers or OFDM symbols. Of course, it is unnecessary to use all resources to send the PUCCH every time in these ranges of PUCCHs of other UEs. The PUCCH resource range (e.g., a PRB range) in the slot is configured by the base station according to demands, and the base station sends related configuration information to all or part of UEs.

For example, the base station allocates PUCCH resources of the UE to two ends of a system bandwidth or two ends of a sub-band, such as configuration of a maximum or minimum PRB index (assuming that PRB indexes in the system bandwidth or the sub-band are continuously numbered from low frequency to high frequency), and PRBs less than or greater than the PRB index are PRBs used by the PUCCH. If the base station does not have any additional indication, the UE can consider that these PRBs do not transmit the PUCCH; or the UE directly considers that these PRBs do not transmit the PUSCH and no additional indication needs to be introduced. For example, PRBs of the system bandwidth or the sub-band are 0 to 99, the base station can configure 10 and 89 as the minimum and maximum PRB indexes, and PRBs with an index less than 10 and PRBs with an index greater than 89 are the PUCCH resource range; or, PRBs of the system bandwidth or the sub-band is 0 to 99, the base station can configure 10 as the PRB index and then agree that PRBs with an index less than 10 and PRBs with an index greater than 99-10 are the PUCCH resource range, and at this point, 99 is the maximum PRB index of the system or the sub-band, and may also be the total number of PRBs of the system or the sub-band. The above is an allocation range of PRB levels of the PUCCH, and some cases further include following allocation. For example, the base station instructs the PUCCH to occupy last several OFDM symbols in the slot (or several OFDM symbols before uplink data) or to occupy a certain OFDM symbol (it is to be noted that this OFDM symbol may not be the last OFDM symbol in the slot, that is, a certain OFDM symbol in the middle of PRBs of the PUSCH is occupied by the PUCCH). In PRBs, the base station can also indicate or agree a PUCCH resource (e.g., a subcarrier) according to subcarriers. For example, in OFDM symbols occupied by the PUCCH in PRBs occupied by the PUCCH, which subcarriers are occupied by the PUCCH (and reference signals of the PUCCH), and remaining subcarriers can still be used by the PUSCH. For example, in PRBs of the PUSCH and in OFDM symbols occupied by the PUCCH, the PUCCH occupies even subcarriers, the PUSCH occupies odd subcarriers. In this manner, in PRBs allocated to the PUSCH, the UE first determines PRBs, OFDM symbols and subcarriers occupied by the PUCCH, and then determines the remaining resources as the PUSCH.

The base station allocates PRB resources for PUSCH transmission to the UE, and after the base station removes part of resources occupied by the PUCCH (e.g., the part of resources are part of OFDM symbols or subcarriers or PRBs in PRBs of the PUSCH) from PRBs allocated for PUSCH transmission, the base station receives data on the PUSCH resources via remaining part of resources in the PRBs allocated for PUSCH transmission, and removes the part of resources occupied by the PUCCH. The base station knows this part of resources, since PUCCH resources of all UEs are allocated by the base station.

The UE receives information of PRB resources allocated for PUSCH transmission by the base station. After the UE side removes part of resources occupied by the PUCCH from the allocated PRBs for PUSCH transmission, the UE side transmits data on the PUSCH resource by using remaining part of resources. The removal of the part of resources occupied by the PUCCH refers to removal of part of resources that conflict with the PUCCH resource notified or broadcasted by the base station from the resource allocated for PUSCH transmission. For specific acquisition of the PUCCH resource, reference is made to the foregoing description.

Apparently, for the solution in the example 5, the UE always assumes that the PUCCH possibly occupies resources for PUSCH transmission and the UE always needs to perform the processing process of removing the part of resources occupied by the PUCCH, but when the PUSCH resources are not actually occupied by the PUCCH, the UE still needs to perform this processing process. The solution is feasible but can be better if it can be optimized. For the example 5, resource indication information can be further added. This resource indication information is used for indicating whether the PUSCH resource allocated for the UE includes the PUCCH resource. If the resource indication information indicates that the PUSCH resource includes the PUCCH resource, the UE deduces that remaining PUSCH resources are used for data transmission; otherwise, the UE does not perform deduction. In this manner, UE behavior can be saved, thereby reducing resource consumption. This resource indication information can be carried in uplink grant information corresponding to the PUSCH of the UE and sent to the UE.

### Example 6

For a special case in which the UE has a PUCCH and a PUSCH to be transmitted in the same slot, the main idea is that when the PUSCH and the PUCCH of the same UE are simultaneously transmitted, the UE determines resources of the PUSCH; the base station and the UE agree that when the UE simultaneously transmits the PUCCH and the PUSCH in a slot, the PUCCH is always located in the PUCCH resource, and which resources in the PUSCH resources are occupied is also indicated by the base station or agreed by the base station and the UE; the manner for the PUCCH to occupy PUSCH resources may refer to the description of the PUCCH resource allocation in the example 5; positions of PRBs occupied by the PUCCH should be pre-agreed by the UE and the base station, for example, PRBs are continuously occupied starting from the PRB with the minimum PRB index of the PUSCH, the number of occupied OFDM symbols is indicated by the base station, and if the PUCCH supports frequency hopping in the slot, the pattern of frequency hopping also needs to be agreed; and for example, first several (determined according to the number of OFDM symbols of the slot) OFDM symbols in the slot of the PUCCH occupy PRBs with smaller indexes, and last several (determined according to the number of OFDM symbols of the slot) OFDM symbols occupy PRBs with larger indexes.

The base station allocates resources for PUSCH transmission to the UE, removes part of resources used by the PUCCH of the UE from the allocated resources for PUSCH transmission to obtain a resource actually used for PUSCH transmission, and then receives data transmitted by the UE via remaining part of resources (the resource actually used for PUSCH transmission).

The UE receives resources allocated for PUSCH transmission by the base station, removes resources used by the PUCCH of the UE from the resources for PUSCH transmission to obtain a resource actually used for PUSCH transmission, and transmits data to the base station via remaining resources (the resource actually used for PUSCH transmission).

In this example, it is first assumed that in a slot, when the UE simultaneously transmits a PUCCH and a PUSCH, the UE performs the operation described above. Besides the above-mentioned manner, if resources for PUSCH transmission allocated to the UE further include other resources for transmitting the PUCCH of the UE, the UE also needs to remove the other resources. Specifically, how to acquire PUCCH resources of other UEs is described in the manner 1, which can refer to the example 5.

FIG. 11 is a structural diagram of a second apparatus for determining a data transmission resource in the present disclosure. As shown in FIG. 11, the second apparatus 011 for determining a data transmission resource provided by the embodiments of the present disclosure includes a sending module 111, an allocating module 112 and a processing module 113.

The sending module 111 is configured to notify or broadcast allocation information of a PUCCH resource in a slot.

The allocating module 112 is configured to allocate a resource for data transmission in a PUSCH.

The processing module 113 is configured to receive data via the allocated resource for data transmission, and remove a resource occupied by a PUCCH from a resource corresponding to information of the resource for data transmission to obtain a resource actually used for data transmission in the resource for data transmission.

In this embodiment, the sending module 111 is configured to perform at least one of the followings.

A PUCCH resource range for all UEs in the slot is notified or broadcasted.

A PUCCH resource range in the slot is notified or broadcasted.

A PUCCH resource range configured semi-statically in the slot is notified or broadcasted.

A PUCCH resource range for other UEs in the slot is notified or broadcasted, where the other UEs are UEs other than the UE with the allocated resource for data transmission.

In this embodiment, the PUCCH resource includes the followings:
a short PUCCH resource;
a long PUCCH resource; or
a short PUCCH resource and a long PUCCH resource.

In this embodiment, the processing module 113 is configured to:
when the resource for data transmission includes part or all of the notified or broadcasted PUCCH resource in the slot, remove the part or all of the PUCCH resource from the resource corresponding to information of the resource for data transmission.

The resource occupied by the PUCCH includes at least one of the following: part of OFDM symbols, part of PRBs, part of subcarriers or part of combinations, where the part of combinations include any combination of the part of OFDM symbols, the part of PRBs and the part of subcarriers.

In this embodiment, the sending module 111 is further configured to:
send resource indication information, where the resource indication information is used for indicating whether the resource for data transmission includes a PUCCH resource.

In this embodiment, the resource indication information and the resource corresponding to information of the resource for data transmission are sent in the same uplink grant information.

In this embodiment, the processing module 113 is further configured to:
when a UE has a PUSCH and a PUCCH to be transmitted in a same slot, agree that a PUCCH resource for the UE is located in a resource for data transmission for the UE, and agree the PUCCH resource occupied by the UE.

In this embodiment, the sending module 111 is configured to:
notify or broadcast the allocation information of the PUCCH resource in the slot in a transmission manner, where the transmission manner includes a cell transmission manner and a beam transmission manner.

The apparatus in this embodiment can be used for executing the technical solutions of the above-mentioned method embodiments. The implementation principle and technical effects are similar and thus will not be repeated herein.

In practical applications, the sending module 111, the allocating module 112 and the processing module 113 may all be implemented by a CPU, an MPU, a DSP or an FPGA located in the second apparatus 011 for determining a data transmission resource.

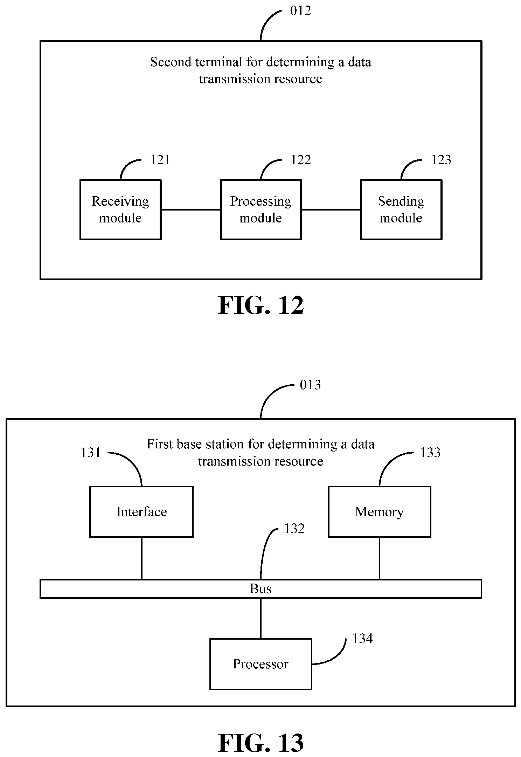

FIG. 12 is a structural diagram of a second terminal for determining a data transmission resource in the present disclosure. As shown in FIG. 12, the second terminal 012 for determining a data transmission resource provided by the embodiments of the present disclosure includes a receiving module 121 and a processing module 122.

The receiving module 121 is configured to receive allocation information of a PUCCH resource in a slot notified or broadcasted by a base station, and receive information of a resource for data transmission in a PUSCH sent by the base station.

The processing module 122 is configure to remove a resource occupied by a PUCCH from a resource corresponding to the information of the resource for data transmission to obtain a resource actually used for data transmission in the resource for data transmission.

In this embodiment, the second terminal 012 further includes a sending module 123.

The sending module 123 is configured to send data to the base station in the resource actually used for data transmission.

In this embodiment, the notification or broadcasting of the allocation information of the PUCCH resource in the slot includes at least one of the followings.

A PUCCH resource range for all UEs in the slot is notified or broadcasted.

A PUCCH resource range in the slot is notified or broadcasted.

A PUCCH resource range configured semi-statically in the slot is notified or broadcasted.

A PUCCH resource range for other UEs in the slot is notified or broadcasted, where the other UEs are UEs other than the UE with the allocated resource for data transmission.

In this embodiment, the PUCCH resource includes the followings:
a short PUCCH resource;
a long PUCCH resource; or
a short PUCCH resource and a long PUCCH resource.

In this embodiment, the processing module 122 is configured to:
when the resource for data transmission includes part or all of the notified or broadcasted PUCCH resource in the slot, remove the part or all of the PUCCH resource from the resource corresponding to information of the resource for data transmission.

The resource occupied by the PUCCH includes at least one of the following: part of OFDM symbols, part of PRBs, part of subcarriers or part of combinations, where the part of combinations include any combination of the part of OFDM symbols, the part of PRBs and the part of subcarriers.

In this embodiment, the receiving module 121 is further configured to:
receive resource indication information sent by the base station, where the resource indication information is used for indicating whether the resource for data transmission allocated by the base station in the PUSCH includes a PUCCH resource. Alternatively, the receiving module 121 is configured to receive resource indication information sent by the base station, where the resource indication information is used for indicating whether rate matching is required for the resource for data transmission allocated by the base station in the PUSCH to remove the resource occupied by the PUCCH.

In this embodiment, the processing module 122 is configured to:
when the resource indication information indicates that the resource for data transmission allocated by the base station in the PUSCH includes the PUCCH resource, remove the resource occupied by the PUCCH from the resource corresponding to information of the resource for data transmission.

In this embodiment, the processing module 122 is further configured to:
when the resource indication information indicates that the resource for data transmission allocated by the base station in the PUSCH does not include the PUCCH resource, not remove the resource occupied by the PUCCH from the resource corresponding to information of the resource for data transmission.

In this embodiment, the resource indication information and the resource corresponding to information of the resource for data transmission are received in the same uplink grant information.

In this embodiment, the processing module 122 is further configured to:
when a PUSCH and a PUCCH need to be transmitted in a same slot, agree with the base station that a PUCCH resource for second device is located in a resource for data transmission for the second device, and agree with the base station the PUCCH resource occupied by the second device.

In this embodiment, the receiving module 121 is configured to:
The allocation information of the PUCCH resource in the slot notified or broadcasted by the base station is received in a transmission manner, where the transmission manner includes a cell transmission manner and a beam transmission manner.

The terminal in this embodiment can be used for executing the technical solutions of the above-mentioned method embodiments. The implementation principle and technical effects are similar and thus will not be repeated herein.

In practical applications, the receiving module 121, the processing module 122 and the sending module 123 may all be implemented by a CPU, an MPU, a DSP or an FPGA located in the second terminal 012 for determining a data transmission resource.

FIG. 13 is a structural diagram of a first base station for determining a data transmission resource in the present disclosure. As shown in FIG. 13, the first base station 013 for determining a data transmission resource provided by the embodiments of the present disclosure includes an interface 131, a bus 132, a memory 133 and a processor 134. The interface 131, the memory 133 and the processor 134 are connected via the bus 132. The memory 133 is configured to store instructions.

The processor 134 reads the instructions to send PUSCH resource information and indication information.

The PUSCH resource information includes information used for indicating a resource allocated for data transmission of a UE in a PUSCH.

The indication information is used for indicating at least one of the followings:
whether the resource for data transmission includes a PUCCH resource;
a resource actually used for data transmission in the resource for data transmission; or
whether rate matching is required for the resource for data transmission to remove a resource occupied by a PUCCH.

In this embodiment, the processor 134 reads the instructions further to:
receive data sent by the UE in the resource for data transmission; and
determine the resource actually used for data transmission according to the indication information, and parse the data.

In this embodiment, when the PUCCH resource is a short PUCCH resource, the indication information includes at least one of the followings:
indication of inexistence of a short PUCCH resource in the resource for data transmission, where the inexistence of the short PUCCH resource includes: inexistence of a short PUCCH resource for a current UE, and inexistence of a short PUCCH resource for any UE other than the current UE;
indication of existence of a short PUCCH resource for a current UE in the resource for data transmission;
indication of one or more OFDM symbols unused by the resource for data transmission;
indication of an OFDM symbol at start of the resource for data transmission and/or an OFDM symbol at end of the resource for data transmission;
indication of one or more OFDM symbols unused by the resource for data transmission, and indication of inexistence of a short PUCCH resource in the resource for data transmission, where the inexistence of the short PUCCH resource includes: inexistence of a short PUCCH resource for a current UE, and inexistence of a short PUCCH resource for any UE other than the current UE;
indication of one or more OFDM symbols unused by the resource for data transmission, and indication of existence of a short PUCCH resource for the first terminal in the resource for data transmission;
indication of an OFDM symbol at start of the resource for data transmission and/or an OFDM symbol at end of the resource for data transmission, and indication of inexistence of a short PUCCH resource in the resource for data transmission, where the inexistence of the short PUCCH resource includes: inexistence of a short PUCCH resource for a current UE, and inexistence of a short PUCCH resource for any UE other than the current UE; or
indication of an OFDM symbol at start of the resource for data transmission and/or an OFDM symbol at end of the resource for data transmission, and indication of existence of a short PUCCH resource for a current UE in the resource for data transmission.

In this embodiment, when the PUCCH resource is a long PUCCH resource, the indication information includes at least one of the followings:
indication of inexistence of a long PUCCH resource in the resource for data transmission, where the inexistence of the long PUCCH resource includes: inexistence of a long PUCCH resource for a current UE, and inexistence of a long PUCCH resource for any UE other than the current UE;
indication of existence of a long PUCCH resource for a current UE in the resource for data transmission;
indication of one or more OFDM symbols unused by the resource for data transmission;
indication of an OFDM symbol at start of the resource for data transmission and/or an OFDM symbol at end of the resource for data transmission;
indication of one or more OFDM symbols unused by the resource for data transmission, and indication of inexistence of a long PUCCH resource in the resource for data transmission, where the inexistence of the long PUCCH resource includes: inexistence of a long PUCCH resource for a current UE, and inexistence of a long PUCCH resource for any UE other than the current UE;
indication of one or more OFDM symbols unused by the resource for data transmission, and indication of existence of a long PUCCH resource for a current UE in the resource for data transmission;
indication of an OFDM symbol at start of the resource for data transmission and/or an OFDM symbol at end of the resource for data transmission, and indication of inexistence of a long PUCCH resource in the resource for data transmission, where the inexistence of the long PUCCH resource includes: inexistence of a long PUCCH resource for a current UE, and inexistence of a long PUCCH resource for any UE other than the current UE; or
indication of an OFDM symbol at start of the resource for data transmission and/or an OFDM symbol at end of the resource for data transmission, and indication of existence of a long PUCCH resource for a current UE in the resource for data transmission.

In this embodiment, when the PUCCH resource is a combination of a short PUCCH resource and a long PUCCH resource, the indication information includes at least one of the followings:
indication of inexistence of a short PUCCH resource or a long PUCCH resource in the resource for data transmission, where the inexistence of the short PUCCH resource or the long PUCCH resource includes: inexistence of a short PUCCH resource or a long PUCCH resource for a current UE, and inexistence of a short PUCCH resource or a long PUCCH resource for any UE other than the current UE;
indication of existence of a short PUCCH resource for a current UE in the resource for data transmission, inexistence of a long PUCCH resource for the current UE in the resource for data transmission, and inexistence of a short PUCCH resource or a long PUCCH resource for any UE other than the current UE in the resource for data transmission;
indication of inexistence of a short PUCCH resource for a current UE in the resource for data transmission, existence of a long PUCCH resource for the current UE in the resource for data transmission, and/or inexistence of a short PUCCH resource or a long PUCCH resource for any UE other than the current UE in the resource for data transmission;
indication of existence of a short PUCCH resource and a long PUCCH resource for a current UE in the resource for data transmission, and inexistence of a short PUCCH resource or a long PUCCH resource for any UE other than the current UE in the resource for data transmission;
indication of one or more OFDM symbols unused by the resource for data transmission;
indication of an OFDM symbol at start of the resource for data transmission and/or an OFDM symbol at end of the resource for data transmission;
indication of one or more OFDM symbols unused by the resource for data transmission, and indication of inexistence of a short PUCCH resource or a long PUCCH resource in the resource for data transmission, where the inexistence of the short PUCCH resource or the long PUCCH resource includes: inexistence of a short PUCCH resource or a long PUCCH resource for a current UE, and inexistence of a short PUCCH resource or a long PUCCH resource for any UE other than the current UE;
indication of one or more OFDM symbols unused by the resource for data transmission, and indication of existence of a short PUCCH resource for a current UE in the resource for data transmission, inexistence of a long PUCCH resource for the current UE in the resource for data transmission, and inexistence of a short PUCCH resource or a long PUCCH resource for any UE other than the current UE in the resource for data transmission;
indication of one or more OFDM symbols unused by the resource for data transmission, and indication of inexistence of a short PUCCH resource for a current UE in the resource for data transmission, existence of a long PUCCH resource for the current UE in the resource for data transmission, and inexistence of a short PUCCH resource or a long PUCCH resource for any UE other than the current UE in the resource for data transmission;
indication of one or more OFDM symbols unused by the resource for data transmission, and indication of existence of a short PUCCH resource and a long PUCCH resource for a current UE in the resource for data transmission, and inexistence of a short PUCCH resource or a long PUCCH resource for any UE other than the current UE in the resource for data transmission;
indication of an OFDM symbol at start of the resource for data transmission and/or an OFDM symbol at end of the resource for data transmission, and indication of inexistence of a short PUCCH resource or a long PUCCH resource in the resource for data transmission, where the inexistence of the short PUCCH resource or the long PUCCH resource includes: inexistence of a short PUCCH resource or a long PUCCH resource for a current UE, and inexistence of a short PUCCH resource or a long PUCCH resource for any UE other than the current UE;
indication of an OFDM symbol at start of the resource for data transmission and/or an OFDM symbol at end of the resource for data transmission, and indication of existence of a short PUCCH resource for a current UE in the resource for data transmission, inexistence of a long PUCCH resource for the current UE in the resource for data transmission, and inexistence of a short PUCCH resource or a long PUCCH resource for any UE other than the current UE in the resource for data transmission;
indication of an OFDM symbol at start of the resource for data transmission and/or an OFDM symbol at end of the resource for data transmission, and indication of inexistence of a short PUCCH resource for a current UE in the resource for data transmission, existence of a long PUCCH resource for the current UE in the resource for data transmission, and inexistence of a short PUCCH resource or a long PUCCH resource for any UE other than the current UE in the resource for data transmission; or
indication of an OFDM symbol at start of the resource for data transmission and/or an OFDM symbol at end of the resource for data transmission, and indication of existence of a short PUCCH resource and a long PUCCH resource for a current UE in the resource for data transmission, and inexistence of a short PUCCH resource or a long PUCCH resource for any UE other than the current UE in the resource for data transmission.

The base station in this embodiment can be used for executing the technical solutions of the above-mentioned method embodiments. The implementation principle and technical effects are similar and thus will not be repeated herein.

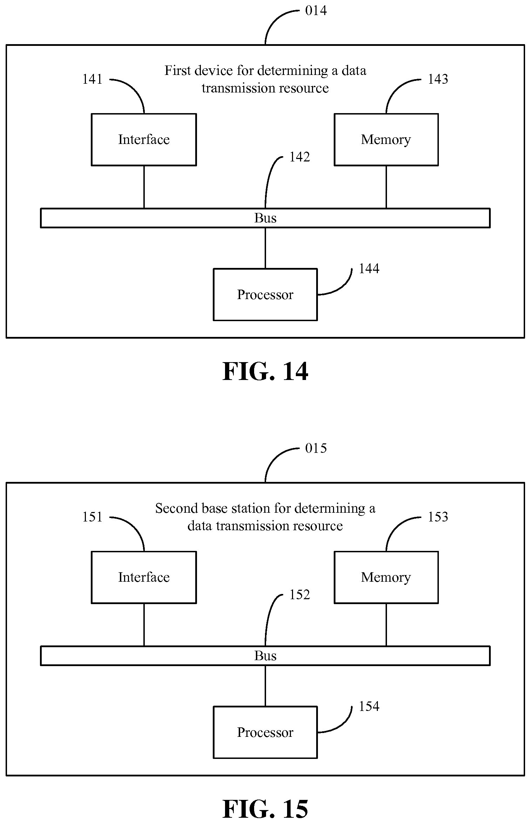

FIG. 14 is a structural diagram of a first device for determining a data transmission resource in the present disclosure. As shown in FIG. 14, the first device 014 for determining a data transmission resource provided by the embodiments of the present disclosure includes an interface 141, a bus 142, a memory 143 and a processor 144. The interface 141, the memory 143 and the processor 144 are connected via the bus 142. The memory 143 is configured to store instructions.

The processor 144 reads the instructions to receive PUSCH resource information and indication information sent by a base station.

The PUSCH resource information includes information used for indicating a resource for data transmission allocated by the base station in a PUSCH, and the indication information is used for indicating at least one of the followings: whether the resource for data transmission includes a PUCCH resource; a resource actually used for data transmission in the resource for data transmission, or whether rate matching is required for the resource for data transmission to remove a resource occupied by a PUCCH.

In this embodiment, the processor 144 reads the instructions further to:
send data to the base station in the resource actually used for data transmission.

In this embodiment, when the PUCCH resource is a short PUCCH resource, the indication information includes at least one of the followings:
indication of inexistence of a short PUCCH resource in the resource for data transmission, where the inexistence of the short PUCCH resource includes: inexistence of a short PUCCH resource for a current UE, and inexistence of a short PUCCH resource for any UE other than the current UE;
indication of existence of a short PUCCH resource for a current UE in the resource for data transmission;
indication of one or more OFDM symbols unused by the resource for data transmission;
indication of an OFDM symbol at start of the resource for data transmission and/or an OFDM symbol at end of the resource for data transmission;
indication of one or more OFDM symbols unused by the resource for data transmission, and indication of inexistence of a short PUCCH resource in the resource for data transmission, where the inexistence of the short PUCCH resource includes: inexistence of a short PUCCH resource for a current UE, and inexistence of a short PUCCH resource for any UE other than the current UE;
indication of one or more OFDM symbols unused by the resource for data transmission, and indication of existence of a short PUCCH resource for the first terminal in the resource for data transmission;
indication of an OFDM symbol at start of the resource for data transmission and/or an OFDM symbol at end of the resource for data transmission, and indication of inexistence of a short PUCCH resource in the resource for data transmission, where the inexistence of the short PUCCH resource includes: inexistence of a short PUCCH resource for a current UE, and inexistence of a short PUCCH resource for any UE other than the current UE; or
indication of an OFDM symbol at start of the resource for data transmission and/or an OFDM symbol at end of the resource for data transmission, and indication of existence of a short PUCCH resource for a current UE in the resource for data transmission.

In this embodiment, when the PUCCH resource is a long PUCCH resource, the indication information includes at least one of the followings:
indication of inexistence of a long PUCCH resource in the resource for data transmission, where the inexistence of the long PUCCH resource includes: inexistence of a long PUCCH resource for a current UE, and inexistence of a long PUCCH resource for any UE other than the current UE;
indication of existence of a long PUCCH resource for a current UE in the resource for data transmission;
indication of one or more OFDM symbols unused by the resource for data transmission;
indication of an OFDM symbol at start of the resource for data transmission and/or an OFDM symbol at end of the resource for data transmission;
indication of one or more OFDM symbols unused by the resource for data transmission, and indication of inexistence of a long PUCCH resource in the resource for data transmission, where the inexistence of the long PUCCH resource includes: inexistence of a long PUCCH resource for a current UE, and inexistence of a long PUCCH resource for any UE other than the current UE;
indication of one or more OFDM symbols unused by the resource for data transmission, and indication of existence of a long PUCCH resource for a current UE in the resource for data transmission;
indication of an OFDM symbol at start of the resource for data transmission and/or an OFDM symbol at end of the resource for data transmission, and indication of inexistence of a long PUCCH resource in the resource for data transmission, where the inexistence of the long PUCCH resource includes: inexistence of a long PUCCH resource for a current UE, and inexistence of a long PUCCH resource for any UE other than the current UE; or
indication of an OFDM symbol at start of the resource for data transmission and/or an OFDM symbol at end of the resource for data transmission, and indication of existence of a long PUCCH resource for a current UE in the resource for data transmission.

In this embodiment, when the PUCCH resource is a combination of a short PUCCH resource and a long PUCCH resource, the indication information includes at least one of the followings:
indication of inexistence of a short PUCCH resource or a long PUCCH resource in the resource for data transmission, where the inexistence of the short PUCCH resource or the long PUCCH resource includes: inexistence of a short PUCCH resource or a long PUCCH resource for a current UE, and inexistence of a short PUCCH resource or a long PUCCH resource for any UE other than the current UE;
indication of existence of a short PUCCH resource for a current UE in the resource for data transmission, inexistence of a long PUCCH resource for the current UE in the resource for data transmission, and inexistence of a short PUCCH resource or a long PUCCH resource for any UE other than the current UE in the resource for data transmission;
indication of inexistence of a short PUCCH resource for a current UE in the resource for data transmission, existence of a long PUCCH resource for the current UE in the resource for data transmission, and inexistence of a short PUCCH resource or a long PUCCH resource for any UE other than the current UE in the resource for data transmission;
indication of existence of a short PUCCH resource and a long PUCCH resource for a current UE in the resource for data transmission, and inexistence of a short PUCCH resource or a long PUCCH resource for any UE other than the current UE in the resource for data transmission;
indication of one or more OFDM symbols unused by the resource for data transmission;
indication of an OFDM symbol at start of the resource for data transmission and/or an OFDM symbol at end of the resource for data transmission;
indication of one or more OFDM symbols unused by the resource for data transmission, and indication of inexistence of a short PUCCH resource or a long PUCCH resource in the resource for data transmission, where the inexistence of the short PUCCH resource or the long PUCCH resource includes: inexistence of a short PUCCH resource or a long PUCCH resource for a current UE, and/or inexistence of a short PUCCH resource or a long PUCCH resource for any UE other than the current UE;
indication of one or more OFDM symbols unused by the resource for data transmission, and indication of existence of a short PUCCH resource for a current UE in the resource for data transmission, inexistence of a long PUCCH resource for the current UE in the resource for data transmission, and/or inexistence of a short PUCCH resource or a long PUCCH resource for any UE other than the current UE in the resource for data transmission;
indication of one or more OFDM symbols unused by the resource for data transmission, and indication of inexistence of a short PUCCH resource for a current UE in the resource for data transmission, existence of a long PUCCH resource for the current UE in the resource for data transmission, and inexistence of a short PUCCH resource or a long PUCCH resource for any UE other than the current UE in the resource for data transmission;
indication of one or more OFDM symbols unused by the resource for data transmission, and indication of existence of a short PUCCH resource and a long PUCCH resource for a current UE in the resource for data transmission, and inexistence of a short PUCCH resource or a long PUCCH resource for any UE other than the current UE in the resource for data transmission;
indication of an OFDM symbol at start of the resource for data transmission and/or an OFDM symbol at end of the resource for data transmission, and indication of inexistence of a short PUCCH resource or a long PUCCH resource in the resource for data transmission, where the inexistence of the short PUCCH resource or the long PUCCH resource includes: inexistence of a short PUCCH resource or a long PUCCH resource for a current UE, and inexistence of a short PUCCH resource or a long PUCCH resource for any UE other than the current UE;
indication of an OFDM symbol at start of the resource for data transmission and/or an OFDM symbol at end of the resource for data transmission, and indication of existence of a short PUCCH resource for a current UE in the resource for data transmission, inexistence of a long PUCCH resource for the current UE in the resource for data transmission, and inexistence of a short PUCCH resource or a long PUCCH resource for any UE other than the current UE in the resource for data transmission;
indication of an OFDM symbol at start of the resource for data transmission and/or an OFDM symbol at end of the resource for data transmission, and indication of inexistence of a short PUCCH resource for a current UE in the resource for data transmission, existence of a long PUCCH resource for the current UE in the resource for data transmission, and inexistence of a short PUCCH resource or a long PUCCH resource for any UE other than the current UE in the resource for data transmission; or
indication of an OFDM symbol at start of the resource for data transmission and/or an OFDM symbol at end of the resource for data transmission, and indication of existence of a short PUCCH resource and a long PUCCH resource for a current UE in the resource for data transmission, and inexistence of a short PUCCH resource or a long PUCCH resource for any UE other than the current UE in the resource for data transmission.

The device in this embodiment can be used for executing the technical solutions of the above-mentioned method embodiments. The implementation principle and technical effects are similar and thus will not be repeated herein.

FIG. 15 is a structural diagram of a second base station for determining a data transmission resource in the present disclosure. As shown in FIG. 15, the second base station 015 for determining a data transmission resource provided by the embodiments of the present disclosure includes an interface 151, a bus 152, a memory 153 and a processor 154. The interface 151, the memory 153 and the processor 154 are connected via the bus 152. The memory 153 is configured to store instructions.

The processor 154 reads the instructions to notify or broadcast allocation information of a PUCCH resource in a slot;
allocate a resource for data transmission in a PUSCH; and
receive data via the allocated resource for data transmission, and remove a resource occupied by a PUCCH from a resource corresponding to information of the resource for data transmission to obtain a resource actually used for data transmission in the resource for data transmission.

In this embodiment, the processor 154 reads the instructions to specifically perform at least one of the following s.

A PUCCH resource range for all UEs in the slot is notified or broadcasted.

A PUCCH resource range in the slot is notified or broadcasted.

A PUCCH resource range configured semi-statically in the slot is notified or broadcasted.

A PUCCH resource range for other UEs in the slot is notified or broadcasted, where the other UEs are UEs other than the UE with the allocated resource for data transmission.

In this embodiment, the PUCCH resource includes the followings:
a short PUCCH resource;
a long PUCCH resource; or
a short PUCCH resource and a long PUCCH resource.

In this embodiment, the processor 154 reads the instructions specifically to:
when the resource for data transmission includes part or all of the notified or broadcasted PUCCH resource in the slot, remove the part or all of the PUCCH resource from the resource corresponding to information of the resource for data transmission.

The resource occupied by the PUCCH includes at least one of the following: part of OFDM symbols, part of PRBs, part of subcarriers or part of combinations, where the part of combinations include any combination of the part of OFDM symbols, the part of PRBs and the part of subcarriers.

In this embodiment, the processor 154 reads the instructions further to:
send resource indication information, where the resource indication information is used for indicating whether the resource for data transmission includes a PUCCH resource.

In this embodiment, the resource indication information and the resource corresponding to information of the resource for data transmission are sent in the same uplink grant information.

In this embodiment, the processor 154 reads the instructions further to:
when a UE has a PUSCH and a PUCCH to be transmitted in a same slot, agree that a PUCCH resource for the UE is located in a resource for data transmission for the UE, and agree the PUCCH resource occupied by the UE.

In this embodiment, the processor 154 reads the instructions specifically to:
notify or broadcast the allocation information of the PUCCH resource in the slot in a transmission manner, where the transmission manner includes a cell transmission manner and a beam transmission manner.

The base station in this embodiment can be used for executing the technical solutions of the above-mentioned method embodiments. The implementation principle and technical effects are similar and thus will not be repeated herein.

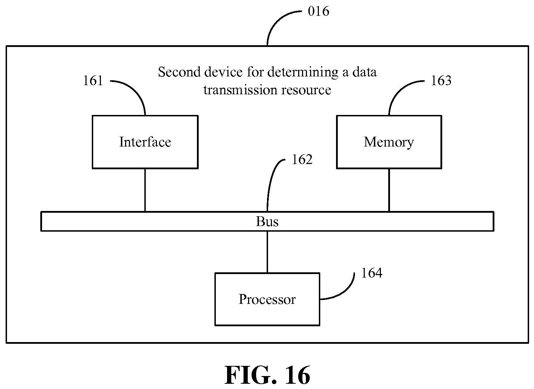

FIG. 16 is a structural diagram of a second device for determining a data transmission resource in the present disclosure. As shown in FIG. 16, the second device 016 for determining a data transmission resource provided by the embodiments of the present disclosure includes an interface 161, a bus 162, a memory 163 and a processor 164. The interface 161, the memory 163 and the processor 164 are connected via the bus 162. The memory 163 is configured to store instructions.

The processor 164 reads the instructions to receive allocation information of a PUCCH resource in a slot notified or broadcasted by a base station, and receive information of a resource for data transmission in a PUSCH sent by the base station; and
remove a resource occupied by a PUCCH from a resource corresponding to the information of the resource for data transmission to obtain a resource actually used for data transmission in the resource for data transmission.

In this embodiment, the processor 164 reads the instructions further to:
send data to the base station in the resource actually used for data transmission.

In this embodiment, the notification or broadcasting of the allocation information of the PUCCH resource in the slot includes at least one of the followings.

A PUCCH resource range for all UEs in the slot is notified or broadcasted.

A PUCCH resource range in the slot is notified or broadcasted.

A PUCCH resource range configured semi-statically in the slot is notified or broadcasted.

A PUCCH resource range for other UEs in the slot is notified or broadcasted, where the other UEs are UEs other than the UE with the allocated resource for data transmission.

In this embodiment, the PUCCH resource includes the followings:
a short PUCCH resource;
a long PUCCH resource; or
a short PUCCH resource and a long PUCCH resource.

In this embodiment, the processor 164 reads the instructions specifically to:
when the resource for data transmission includes part or all of the notified or broadcasted PUCCH resource in the slot, remove the part or all of the PUCCH resource from the resource corresponding to information of the resource for data transmission.

The resource occupied by the PUCCH includes at least one of the following: part of OFDM symbols, part of PRBs, part of subcarriers or part of combinations, where the part of combinations include any combination of the part of OFDM symbols, the part of PRBs and the part of subcarriers.

In this embodiment, the processor 164 reads the instructions further to:
receive resource indication information sent by the base station, where the resource indication information is used for indicating whether the resource for data transmission allocated by the base station in the PUSCH includes a PUCCH resource; or receive resource indication information sent by the base station, where the resource indication information is used for indicating whether rate matching is required for the resource for data transmission allocated by the base station in the PUSCH to remove the resource occupied by the PUCCH.

In this embodiment, the processor 164 reads the instructions specifically to:
when the resource indication information indicates that the resource for data transmission allocated by the base station in the PUSCH includes the PUCCH resource, remove the resource occupied by the PUCCH from the resource corresponding to information of the resource for data transmission.

In this embodiment, the processor 164 reads the instructions further specifically to:
when the resource indication information indicates that the resource for data transmission allocated by the base station in the PUSCH does not include the PUCCH resource, not remove the resource occupied by the PUCCH from the resource corresponding to information of the resource for data transmission.

In this embodiment, the resource indication information and the resource corresponding to information of the resource for data transmission are received in the same uplink grant information.

In this embodiment, the processor 164 reads the instructions further to:
when a PUSCH and a PUCCH need to be transmitted in a same slot, agree with the base station that a PUCCH resource for the second device is located in a resource for data transmission for the second device, and agree with the base station the PUCCH resource occupied by the second device.

In this embodiment, the processor 164 reads the instructions specifically to:
receive the allocation information of the PUCCH resource in the slot notified or broadcasted by the base station in a transmission manner, where the transmission manner includes a cell transmission manner and a beam transmission manner.

The device in this embodiment can be used for executing the technical solutions of the above-mentioned method embodiments. The implementation principle and technical effects are similar and thus will not be repeated herein.

In addition, the embodiments of the present disclosure further provide a computer-readable storage medium. The computer-readable storage medium is configured to store computer-executable instructions for executing the method for determining a data transmission resource applied to the first base station when executed by a processor.

The embodiments of the present disclosure further provide a computer-readable storage medium. The computer-readable storage medium is configured to store computer-executable instructions for executing the method for determining a data transmission resource applied to the second base station when executed by a processor.

The embodiments of the present disclosure further provide a computer-readable storage medium. The computer-readable storage medium is configured to store computer-executable instructions for executing the method for determining a data transmission resource applied to the second base station when executed by a processor.

The embodiments of the present disclosure further provide a computer-readable storage medium. The computer-readable storage medium is configured to store computer-executable instructions for executing the method for determining a data transmission resource applied to the first device when executed by a processor.

The embodiments of the present disclosure further provide a computer-readable storage medium. The computer-readable storage medium is configured to store computer-executable instructions for executing the method for determining a data transmission resource applied to the second device when executed by a processor.

It should be understood by those skilled in the art that the embodiments of the present disclosure may be provided as methods, systems or computer program products. Therefore, the present disclosure may be implemented by hardware, software, or a combination of hardware and software. In addition, the present disclosure may take the form of a computer program product implemented in one or more computer-usable storage media (including, but not limited to, a disk memory and an optical memory) that includes computer-usable program codes.

The present disclosure is described with reference to flowcharts and/or block diagrams of methods, devices (systems) and computer program products according to the embodiments of the present disclosure. It is to be understood that computer program instructions may implement each flow and/or block in the flowcharts and/or block diagrams and a combination of flows and/or blocks in the flowcharts and/or block diagrams. These computer program instructions may be provided to a general-purpose computer, a special-purpose computer, an embedded processor or a processor of another programmable data processing device to produce a machine so that instructions executed by the computer or the processor of another programmable data processing device produce the apparatus for implementing functions designated in one or more flows in the flowcharts and/or one or more blocks in the block diagrams.

These computer program instructions may also be stored in a computer-readable memory which can cause the computer or another programmable data processing device to operate in a particular manner so that the instructions stored in the computer-readable memory produce a manufactured product including an instructing apparatus. The instructing apparatus implements the functions designated in the one or more flows in the flowcharts and/or the one or more blocks in the block diagrams.

These computer program instructions may also be loaded onto the computer or another programmable data processing device so that a series of operation steps are performed on the computer or another programmable device to produce processing implemented by the computer. Therefore, instructions executed on the computer or another programmable device provide steps for implementing the functions designated in the one or more flows in the flowcharts and/or the one or more blocks in the block diagrams.

The above are only preferred embodiments of the present disclosure and are not intended to limit the scope of the present disclosure.

### INDUSTRIAL APPLICABILITY

The technical solutions provided by the embodiments of the present disclosure not only send PUSCH resource information, but also send indication information, where the PUCCH resource information includes resource information used for indicating a resource allocated for data transmission of a UE in a PUSCH, and the indication information is used for indicating whether the resource for data transmission includes a PUCCH resource, and/or the indication information is used for indicating a resource actually used for data transmission in the resource for data transmission. In such a way, the base station side notifies various resource information that the UE requires via one indication. For example, in an NR system, the base station and the UE can determine a resource actually used for PUSCH transmission, such that when the PUSCH and the PUCCH are frequency division multiplexed, the base station and the UE can accurately and quickly know the resource actually used for PUSCH transmission from allocated resources for PUSCH transmission, effectively saving system resources, reducing overhead and improving indication efficiency, thereby acquiring positive industrial beneficial effects. At the same time, the technical solutions obtain a characteristic of simple and easy implementation, thereby acquiring strong realizability and being widely popularized and used in industry.

## Claims

1. A method for determining a data transmission resource, comprising:
sending physical uplink shared channel, PUSCH, resource information and indication information;
wherein the PUSCH resource information comprises information used for indicating a resource allocated for data transmission of a user equipment, UE, in a PUSCH, and the indication information is used for indicating at least one of the followings:
whether the resource for data transmission comprises a physical uplink control channel, PUCCH, resource;
a resource actually used for data transmission in the resource for data transmission; or
whether rate matching is required for the resource for data transmission to remove a resource occupied by a PUCCH.

2. The method of claim 1, wherein after sending the PUSCH resource information and the indication information, the method further comprises:
receiving data sent by the UE in the resource for data transmission; and
determining the resource actually used for data transmission according to the indication information, and parsing the data.

3. The method of claim 1, wherein the indication information comprises at least one of the following:
indication of inexistence of a short PUCCH resource in the resource for data transmission, wherein the inexistence of the short PUCCH resource comprises: inexistence of a short PUCCH resource for a current UE, and/or inexistence of a short PUCCH resource for any UE other than the current UE;
indication of existence of a short PUCCH resource for a current UE in the resource for data transmission;
indication of one or more orthogonal frequency-division multiplexing, OFDM, symbols unused by the resource for data transmission;
indication of an OFDM symbol at start of the resource for data transmission and/or an OFDM symbol at end of the resource for data transmission;
indication of one or more OFDM symbols unused by the resource for data transmission, and indication of inexistence of a short PUCCH resource in the resource for data transmission, wherein the inexistence of the short PUCCH resource comprises: inexistence of a short PUCCH resource for a current UE, and/or inexistence of a short PUCCH resource for any UE other than the current UE;
indication of one or more OFDM symbols unused by the resource for data transmission, and indication of existence of a short PUCCH resource for a current UE in the resource for data transmission;
indication of an OFDM symbol at start of the resource for data transmission and/or an OFDM symbol at end of the resource for data transmission, and indication of inexistence of a short PUCCH resource in the resource for data transmission, wherein the inexistence of the short PUCCH resource comprises: inexistence of a short PUCCH resource for a current UE, and/or inexistence of a short PUCCH resource for any UE other than the current UE; and
indication of an OFDM symbol at start of the resource for data transmission and/or an OFDM symbol at end of the resource for data transmission, and indication of existence of a short PUCCH resource for a current UE in the resource for data transmission.

4. The method of claim 1, wherein the indication information comprises at least one of the followings:
indication of inexistence of a long PUCCH resource in the resource for data transmission, wherein the inexistence of the long PUCCH resource comprises: inexistence of a long PUCCH resource for a current UE, and/or inexistence of a long PUCCH resource for any UE other than the current UE;
indication of existence of a long PUCCH resource for a current UE in the resource for data transmission;
indication of one or more OFDM symbols unused by the resource for data transmission;
indication of an OFDM symbol at start of the resource for data transmission and/or an OFDM symbol at end of the resource for data transmission;
indication of one or more OFDM symbols unused by the resource for data transmission, and indication of inexistence of a long PUCCH resource in the resource for data transmission, wherein the inexistence of the long PUCCH resource comprises: inexistence of a long PUCCH resource for a current UE, and inexistence of a long PUCCH resource for any UE other than the current UE;
indication of one or more OFDM symbols unused by the resource for data transmission, and indication of existence of a long PUCCH resource for a current UE in the resource for data transmission;
indication of an OFDM symbol at start of the resource for data transmission and/or an OFDM symbol at end of the resource for data transmission, and indication of inexistence of a long PUCCH resource in the resource for data transmission, wherein the inexistence of the long PUCCH resource comprises: inexistence of a long PUCCH resource for a current UE, and inexistence of a long PUCCH resource for any UE other than the current UE; or
indication of an OFDM symbol at start of the resource for data transmission and/or an OFDM symbol at end of the resource for data transmission, and indication of existence of a long PUCCH resource for a current UE in the resource for data transmission.

5. The method of claim 1, wherein the indication information comprises at least one of the followings:
indication of inexistence of a short PUCCH resource or a long PUCCH resource in the resource for data transmission, wherein the inexistence of the short PUCCH resource or the long PUCCH resource comprises: inexistence of a short PUCCH resource or a long PUCCH resource for a current UE, and/or inexistence of a short PUCCH resource or a long PUCCH resource for any UE other than the current UE;
indication of existence of a short PUCCH resource for a current UE in the resource for data transmission, inexistence of a long PUCCH resource for the current UE in the resource for data transmission, and inexistence of a short PUCCH resource or a long PUCCH resource for any UE other than the current UE in the resource for data transmission;
indication of inexistence of a short PUCCH resource for a current UE in the resource for data transmission, existence of a long PUCCH resource for the current UE in the resource for data transmission, and inexistence of a short PUCCH resource or a long PUCCH resource for any UE other than the current UE in the resource for data transmission;
indication of existence of a short PUCCH resource and a long PUCCH resource for a current UE in the resource for data transmission, and inexistence of a short PUCCH resource or a long PUCCH resource for any UE other than the current UE in the resource for data transmission;
indication of one or more OFDM symbols unused by the resource for data transmission;
indication of an OFDM symbol at start of the resource for data transmission and/or an OFDM symbol at end of the resource for data transmission;
indication of one or more OFDM symbols unused by the resource for data transmission, and indication of inexistence of a short PUCCH resource or a long PUCCH resource in the resource for data transmission, wherein the inexistence of the short PUCCH resource or the long PUCCH resource comprises: inexistence of a short PUCCH resource or a long PUCCH resource for a current UE, and/or inexistence of a short PUCCH resource or a long PUCCH resource for any UE other than the current UE;
indication of one or more OFDM symbols unused by the resource for data transmission, and indication of existence of a short PUCCH resource for a current UE in the resource for data transmission, inexistence of a long PUCCH resource for the current UE in the resource for data transmission, and inexistence of a short PUCCH resource or a long PUCCH resource for any UE other than the current UE in the resource for data transmission;
indication of one or more OFDM symbols unused by the resource for data transmission, and indication of inexistence of a short PUCCH resource for a current UE in the resource for data transmission, existence of a long PUCCH resource for the current UE in the resource for data transmission, and inexistence of a short PUCCH resource or a long PUCCH resource for any UE other than the current UE in the resource for data transmission;
indication of one or more OFDM symbols unused by the resource for data transmission, and indication of existence of a short PUCCH resource and a long PUCCH resource for a current UE in the resource for data transmission, and inexistence of a short PUCCH resource or a long PUCCH resource for any UE other than the current UE in the resource for data transmission;
indication of an OFDM symbol at start of the resource for data transmission and/or an OFDM symbol at end of the resource for data transmission, and indication of inexistence of a short PUCCH resource or a long PUCCH resource in the resource for data transmission, wherein the inexistence of the short PUCCH resource or the long PUCCH resource comprises: inexistence of a short PUCCH resource or a long PUCCH resource for a current UE, and/or inexistence of a short PUCCH resource or a long PUCCH resource for any UE other than the current UE;
indication of an OFDM symbol at start of the resource for data transmission and/or an OFDM symbol at end of the resource for data transmission, and indication of existence of a short PUCCH resource for a current UE in the resource for data transmission, inexistence of a long PUCCH resource for the current UE in the resource for data transmission, and inexistence of a short PUCCH resource or a long PUCCH resource for any UE other than the current UE in the resource for data transmission;
indication of an OFDM symbol at start of the resource for data transmission and/or an OFDM symbol at end of the resource for data transmission, and indication of inexistence of a short PUCCH resource for a current UE in the resource for data transmission, existence of a long PUCCH resource for the current UE in the resource for data transmission, and inexistence of a short PUCCH resource or a long PUCCH resource for any UE other than the current UE in the resource for data transmission; or
indication of an OFDM symbol at start of the resource for data transmission and/or an OFDM symbol at end of the resource for data transmission, and indication of existence of a short PUCCH resource and a long PUCCH resource for a current UE in the resource for data transmission, and inexistence of a short PUCCH resource or a long PUCCH resource for any UE other than the current UE in the resource for data transmission.

6. A method for determining a data transmission resource, comprising:
receiving physical uplink shared channel, PUSCH, resource information and indication information sent by a base station;
wherein the PUSCH resource information comprises information used for indicating a resource for data transmission allocated by the base station in a PUSCH, and the indication information is used for indicating at least one of the followings:
whether the resource for data transmission comprises a physical uplink control channel, PUCCH, resource;
a resource actually used for data transmission in the resource for data transmission; or
whether rate matching is required for the resource for data transmission to remove a resource occupied by a PUCCH.

7. The method of claim 6, wherein after receiving the PUSCH resource information and the indication information sent by the base station, the method further comprises:
sending data to the base station in the resource actually used for data transmission.

8. The method of claim 6, wherein the indication information comprises at least one of the followings:
indication of inexistence of a short PUCCH resource in the resource for data transmission, wherein the inexistence of the short PUCCH resource comprises: inexistence of a short PUCCH resource for the UE, and/or inexistence of a short PUCCH resource for any UE other than the UE;
indication of existence of a short PUCCH resource for the UE in the resource for data transmission;
indication of one or more orthogonal frequency-division multiplexing, OFDM, symbols unused by the resource for data transmission;
indication of an OFDM symbol at start of the resource for data transmission and/or an OFDM symbol at end of the resource for data transmission;
indication of one or more OFDM symbols unused by the resource for data transmission, and indication of inexistence of a short PUCCH resource in the resource for data transmission, wherein the inexistence of the short PUCCH resource comprises: inexistence of a short PUCCH resource for the UE, and/or inexistence of a short PUCCH resource for any UE other than the UE;
indication of one or more OFDM symbols unused by the resource for data transmission, and indication of existence of a short PUCCH resource for the UE in the resource for data transmission;
indication of an OFDM symbol at start of the resource for data transmission and/or an OFDM symbol at end of the resource for data transmission, and indication of inexistence of a short PUCCH resource in the resource for data transmission, wherein the inexistence of the short PUCCH resource comprises: inexistence of a short PUCCH resource for the UE, and inexistence of a short PUCCH resource for any UE other than the UE; or
indication of an OFDM symbol at start of the resource for data transmission and/or an OFDM symbol at end of the resource for data transmission, and indication of existence of a short PUCCH resource for the UE in the resource for data transmission.

9. The method of claim 6, wherein the indication information comprises at least one of the followings:
indication of inexistence of a long PUCCH resource in the resource for data transmission, wherein the inexistence of the long PUCCH resource comprises: inexistence of a long PUCCH resource for the UE, and/or inexistence of a long PUCCH resource for any UE other than the UE;
indication of existence of a long PUCCH resource for the UE in the resource for data transmission;
indication of one or more OFDM symbols unused by the resource for data transmission;
indication of an OFDM symbol at start of the resource for data transmission and/or an OFDM symbol at end of the resource for data transmission;
indication of one or more OFDM symbols unused by the resource for data transmission, and indication of inexistence of a long PUCCH resource in the resource for data transmission, wherein the inexistence of the long PUCCH resource comprises: inexistence of a long PUCCH resource for the UE, and inexistence of a long PUCCH resource for any UE other than the UE;
indication of one or more OFDM symbols unused by the resource for data transmission, and indication of existence of a long PUCCH resource for the UE in the resource for data transmission;
indication of an OFDM symbol at start of the resource for data transmission and/or an OFDM symbol at end of the resource for data transmission, and indication of inexistence of a long PUCCH resource in the resource for data transmission, wherein the inexistence of the long PUCCH resource comprises: inexistence of a long PUCCH resource for the UE, and inexistence of a long PUCCH resource for any UE other than the UE; or
indication of an OFDM symbol at start of the resource for data transmission and/or an OFDM symbol at end of the resource for data transmission, and indication of existence of a long PUCCH resource for the UE in the resource for data transmission.

10. The method of claim 6, wherein the indication information comprises at least one of the followings:
indication of inexistence of a short PUCCH resource or a long PUCCH resource in the resource for data transmission, wherein the inexistence of the short PUCCH resource or the long PUCCH resource comprises: inexistence of a short PUCCH resource or a long PUCCH resource for the UE, and inexistence of a short PUCCH resource or a long PUCCH resource for any UE other than the UE;
indication of existence of a short PUCCH resource for the UE in the resource for data transmission, inexistence of a long PUCCH resource for the UE in the resource for data transmission, and inexistence of a short PUCCH resource or a long PUCCH resource for any UE other than the UE in the resource for data transmission;
indication of inexistence of a short PUCCH resource for the UE in the resource for data transmission, existence of a long PUCCH resource for the UE in the resource for data transmission, and inexistence of a short PUCCH resource or a long PUCCH resource for any UE other than the UE in the resource for data transmission;
indication of existence of a short PUCCH resource and a long PUCCH resource for the UE in the resource for data transmission, and inexistence of a short PUCCH resource or a long PUCCH resource for any UE other than the UE in the resource for data transmission;
indication of one or more OFDM symbols unused by the resource for data transmission;
indication of an OFDM symbol at start of the resource for data transmission and/or an OFDM symbol at end of the resource for data transmission;
indication of one or more OFDM symbols unused by the resource for data transmission, and indication of inexistence of a short PUCCH resource or a long PUCCH resource in the resource for data transmission, wherein the inexistence of the short PUCCH resource or the long PUCCH resource comprises: inexistence of a short PUCCH resource or a long PUCCH resource for the UE, and/or inexistence of a short PUCCH resource or a long PUCCH resource for any UE other than the UE;
indication of one or more OFDM symbols unused by the resource for data transmission, and indication of existence of a short PUCCH resource for the UE in the resource for data transmission, inexistence of a long PUCCH resource for the UE in the resource for data transmission, and inexistence of a short PUCCH resource or a long PUCCH resource for any UE other than the UE in the resource for data transmission;
indication of one or more OFDM symbols unused by the resource for data transmission, and indication of inexistence of a short PUCCH resource for the UE in the resource for data transmission, existence of a long PUCCH resource for the UE in the resource for data transmission, and inexistence of a short PUCCH resource or a long PUCCH resource for any UE other than the UE in the resource for data transmission;
indication of one or more OFDM symbols unused by the resource for data transmission, and indication of existence of a short PUCCH resource and a long PUCCH resource for the UE in the resource for data transmission, and inexistence of a short PUCCH resource or a long PUCCH resource for any UE other than the UE in the resource for data transmission;
indication of an OFDM symbol at start of the resource for data transmission and/or an OFDM symbol at end of the resource for data transmission, and indication of inexistence of a short PUCCH resource or a long PUCCH resource in the resource for data transmission, wherein the inexistence of the short PUCCH resource or the long PUCCH resource comprises: inexistence of a short PUCCH resource or a long PUCCH resource for the UE, and/or inexistence of a short PUCCH resource or a long PUCCH resource for any UE other than the UE;
indication of an OFDM symbol at start of the resource for data transmission and/or an OFDM symbol at end of the resource for data transmission, and indication of existence of a short PUCCH resource for the UE in the resource for data transmission, inexistence of a long PUCCH resource for the UE in the resource for data transmission, and inexistence of a short PUCCH resource or a long PUCCH resource for any UE other than the UE in the resource for data transmission;
indication of an OFDM symbol at start of the resource for data transmission and/or an OFDM symbol at end of the resource for data transmission, and indication of inexistence of a short PUCCH resource for the UE in the resource for data transmission, existence of a long PUCCH resource for the UE in the resource for data transmission, and inexistence of a short PUCCH resource or a long PUCCH resource for any UE other than the UE in the resource for data transmission; or
indication of an OFDM symbol at start of the resource for data transmission and/or an OFDM symbol at end of the resource for data transmission, and indication of existence of a short PUCCH resource and a long PUCCH resource for the UE in the resource for data transmission, and inexistence of a short PUCCH resource or a long PUCCH resource for any UE other than the UE in the resource for data transmission.

11. A first apparatus for determining a data transmission resource, comprising:
a sending module, which is configured to send physical uplink shared channel, PUSCH, resource information and indication information;
wherein the PUCCH resource information comprises information used for indicating a resource allocated for data transmission of a user equipment, UE, in a PUSCH, and the indication information is used for indicating at least one of the followings:
whether the resource for data transmission comprises a physical uplink control channel, PUCCH, resource;
a resource actually used for data transmission in the resource for data transmission; or
whether rate matching is required for the resource for data transmission to remove a resource occupied by a PUCCH.

12. The first apparatus of claim 11, further comprising:
a receiving module, which is configured to receive data sent by the UE in the resource for data transmission; and
a processing module, which is configured to determine the resource actually used for data transmission according to the indication information, and parse the data.

13. The first apparatus of claim 11, wherein the indication information comprises at least one of the following s:
indication of inexistence of a short PUCCH resource in the resource for data transmission, wherein the inexistence of the short PUCCH resource comprises: inexistence of a short PUCCH resource for a current UE, and/or inexistence of a short PUCCH resource for any UE other than the current UE;
indication of existence of a short PUCCH resource for a current UE in the resource for data transmission;
indication of one or more orthogonal frequency-division multiplexing, OFDM, symbols unused by the resource for data transmission;
indication of an OFDM symbol at start of the resource for data transmission and/or an OFDM symbol at end of the resource for data transmission;
indication of one or more OFDM symbols unused by the resource for data transmission, and indication of inexistence of a short PUCCH resource in the resource for data transmission, wherein the inexistence of the short PUCCH resource comprises: inexistence of a short PUCCH resource for a current UE, and inexistence of a short PUCCH resource for any UE other than the current UE;
indication of one or more OFDM symbols unused by the resource for data transmission, and indication of existence of a short PUCCH resource for a current UE in the resource for data transmission;
indication of an OFDM symbol at start of the resource for data transmission and/or an OFDM symbol at end of the resource for data transmission, and indication of inexistence of a short PUCCH resource in the resource for data transmission, wherein the inexistence of the short PUCCH resource comprises: inexistence of a short PUCCH resource for a current UE, and inexistence of a short PUCCH resource for any UE other than the current UE; or
indication of an OFDM symbol at start of the resource for data transmission and/or an OFDM symbol at end of the resource for data transmission, and indication of existence of a short PUCCH resource for a current UE in the resource for data transmission.

14. The first apparatus of claim 11, wherein the indication information comprises at least one of the following s:
indication of inexistence of a long PUCCH resource in the resource for data transmission, wherein the inexistence of the long PUCCH resource comprises: inexistence of a long PUCCH resource for a current UE, and/or inexistence of a long PUCCH resource for any UE other than the current UE;
indication of existence of a long PUCCH resource for a current UE in the resource for data transmission;
indication of one or more OFDM symbols unused by the resource for data transmission;
indication of an OFDM symbol at start of the resource for data transmission and/or an OFDM symbol at end of the resource for data transmission;
indication of one or more OFDM symbols unused by the resource for data transmission, and indication of inexistence of a long PUCCH resource in the resource for data transmission, wherein the inexistence of the long PUCCH resource comprises: inexistence of a long PUCCH resource for a current UE, and/or inexistence of a long PUCCH resource for any UE other than the current UE;
indication of one or more OFDM symbols unused by the resource for data transmission, and indication of existence of a long PUCCH resource for a current UE in the resource for data transmission;
indication of an OFDM symbol at start of the resource for data transmission and/or an OFDM symbol at end of the resource for data transmission, and indication of inexistence of a long PUCCH resource in the resource for data transmission, wherein the inexistence of the long PUCCH resource comprises: inexistence of a long PUCCH resource for a current UE, and inexistence of a long PUCCH resource for any UE other than the current UE; or
indication of an OFDM symbol at start of the resource for data transmission and/or an OFDM symbol at end of the resource for data transmission, and indication of existence of a long PUCCH resource for a current UE in the resource for data transmission.

15. The first apparatus of claim 11, wherein the indication information comprises at least one of the following s:
indication of inexistence of a short PUCCH resource or a long PUCCH resource in the resource for data transmission, wherein the inexistence of the short PUCCH resource or the long PUCCH resource comprises: inexistence of a short PUCCH resource or a long PUCCH resource for a current UE, and/or inexistence of a short PUCCH resource or a long PUCCH resource for any UE other than the current UE;
indication of existence of a short PUCCH resource for a current UE in the resource for data transmission, inexistence of a long PUCCH resource for the current UE in the resource for data transmission, and inexistence of a short PUCCH resource or a long PUCCH resource for any UE other than the current UE in the resource for data transmission;
indication of inexistence of a short PUCCH resource for a current UE in the resource for data transmission, existence of a long PUCCH resource for the current UE in the resource for data transmission, and inexistence of a short PUCCH resource or a long PUCCH resource for any UE other than the current UE in the resource for data transmission;
indication of existence of a short PUCCH resource and a long PUCCH resource for a current UE in the resource for data transmission, and inexistence of a short PUCCH resource or a long PUCCH resource for any UE other than the current UE in the resource for data transmission;
indication of one or more OFDM symbols unused by the resource for data transmission;
indication of an OFDM symbol at start of the resource for data transmission and/or an OFDM symbol at end of the resource for data transmission;
indication of one or more OFDM symbols unused by the resource for data transmission, and indication of inexistence of a short PUCCH resource or a long PUCCH resource in the resource for data transmission, wherein the inexistence of the short PUCCH resource or the long PUCCH resource comprises: inexistence of a short PUCCH resource or a long PUCCH resource for a current UE, and/or inexistence of a short PUCCH resource or a long PUCCH resource for any UE other than the current UE;
indication of one or more OFDM symbols unused by the resource for data transmission, and indication of existence of a short PUCCH resource for a current UE in the resource for data transmission, inexistence of a long PUCCH resource for the current UE in the resource for data transmission, and inexistence of a short PUCCH resource or a long PUCCH resource for any UE other than the current UE in the resource for data transmission;
indication of one or more OFDM symbols unused by the resource for data transmission, and indication of inexistence of a short PUCCH resource for a current UE in the resource for data transmission, existence of a long PUCCH resource for the current UE in the resource for data transmission, and inexistence of a short PUCCH resource or a long PUCCH resource for any UE other than the current UE in the resource for data transmission;
indication of one or more OFDM symbols unused by the resource for data transmission, and indication of existence of a short PUCCH resource and a long PUCCH resource for a current UE in the resource for data transmission, and inexistence of a short PUCCH resource or a long PUCCH resource for any UE other than the current UE in the resource for data transmission;
indication of an OFDM symbol at start of the resource for data transmission and/or an OFDM symbol at end of the resource for data transmission, and indication of inexistence of a short PUCCH resource or a long PUCCH resource in the resource for data transmission, wherein the inexistence of the short PUCCH resource or the long PUCCH resource comprises: inexistence of a short PUCCH resource or a long PUCCH resource for a current UE, and inexistence of a short PUCCH resource or a long PUCCH resource for any UE other than the current UE;
indication of an OFDM symbol at start of the resource for data transmission and/or an OFDM symbol at end of the resource for data transmission, and indication of existence of a short PUCCH resource for a current UE in the resource for data transmission, inexistence of a long PUCCH resource for the current UE in the resource for data transmission, and inexistence of a short PUCCH resource or a long PUCCH resource for any UE other than the current UE in the resource for data transmission;
indication of an OFDM symbol at start of the resource for data transmission and/or an OFDM symbol at end of the resource for data transmission, and indication of inexistence of a short PUCCH resource for a current UE in the resource for data transmission, existence of a long PUCCH resource for the current UE in the resource for data transmission, and inexistence of a short PUCCH resource or a long PUCCH resource for any UE other than the current UE in the resource for data transmission; or
indication of an OFDM symbol at start of the resource for data transmission and/or an OFDM symbol at end of the resource for data transmission, and indication of existence of a short PUCCH resource and a long PUCCH resource for a current UE in the resource for data transmission, and inexistence of a short PUCCH resource or a long PUCCH resource for any UE other than the current UE in the resource for data transmission.

16. A first terminal for determining a data transmission resource, comprising:
a receiving module, which is configured to receive physical uplink shared channel resource, PUSCH, information and indication information sent by a base station;
wherein the PUSCH resource information comprises information used for indicating a resource for data transmission allocated by the base station in a PUSCH, and the indication information is used for indicating at least one of the followings:
whether the resource for data transmission comprises a physical uplink control channel, PUCCH, resource;
a resource actually used for data transmission in the resource for data transmission; or
whether rate matching is required for the resource for data transmission to remove a resource occupied by a PUCCH.

17. The first terminal of claim 16, further comprising:
a sending module, which is configured to send data to the base station in the resource actually used for data transmission.

18. The first terminal of claim 16, wherein the indication information comprises at least one of the followings:
indication of inexistence of a short PUCCH resource in the resource for data transmission, wherein the inexistence of the short PUCCH resource comprises: inexistence of a short PUCCH resource for the first terminal, and inexistence of a short PUCCH resource for any user equipment, UE, other than the first terminal;
indication of existence of a short PUCCH resource for the first terminal in the resource for data transmission;
indication of one or more orthogonal frequency-division multiplexing, OFDM, symbols unused by the resource for data transmission;
indication of an OFDM symbol at start of the resource for data transmission and/or an OFDM symbol at end of the resource for data transmission;
indication of one or more OFDM symbols unused by the resource for data transmission, and indication of inexistence of a short PUCCH resource in the resource for data transmission, wherein the inexistence of the short PUCCH resource comprises: inexistence of a short PUCCH resource for the first terminal, and/or inexistence of a short PUCCH resource for any UE other than the first terminal;
indication of one or more OFDM symbols unused by the resource for data transmission, and indication of existence of a short PUCCH resource for the first terminal in the resource for data transmission;
indication of an OFDM symbol at start of the resource for data transmission and/or an OFDM symbol at end of the resource for data transmission, and indication of inexistence of a short PUCCH resource in the resource for data transmission, wherein the inexistence of the short PUCCH resource comprises: inexistence of a short PUCCH resource for the first terminal, and inexistence of a short PUCCH resource for any UE other than the first terminal; or
indication of an OFDM symbol at start of the resource for data transmission and/or an OFDM symbol at end of the resource for data transmission, and indication of existence of a short PUCCH resource for the first terminal in the resource for data transmission.

19. The first terminal of claim 16, wherein the indication information comprises at least one of the following s:
indication of inexistence of a long PUCCH resource in the resource for data transmission, wherein the inexistence of the long PUCCH resource comprises: inexistence of a long PUCCH resource for the first terminal, and/or inexistence of a long PUCCH resource for any UE other than the first terminal;
indication of existence of a long PUCCH resource for the first terminal in the resource for data transmission;
indication of one or more OFDM symbols unused by the resource for data transmission;
indication of an OFDM symbol at start of the resource for data transmission and/or an OFDM symbol at end of the resource for data transmission;
indication of one or more OFDM symbols unused by the resource for data transmission, and indication of inexistence of a long PUCCH resource in the resource for data transmission, wherein the inexistence of the long PUCCH resource comprises: inexistence of a long PUCCH resource for the first terminal, and inexistence of a long PUCCH resource for any UE other than the first terminal;
indication of one or more OFDM symbols unused by the resource for data transmission, and indication of existence of a long PUCCH resource for the first terminal in the resource for data transmission;
indication of an OFDM symbol at start of the resource for data transmission and/or an OFDM symbol at end of the resource for data transmission, and indication of inexistence of a long PUCCH resource in the resource for data transmission, wherein the inexistence of the long PUCCH resource comprises: inexistence of a long PUCCH resource for the first terminal, and inexistence of a long PUCCH resource for any UE other than the first terminal; or
indication of an OFDM symbol at start of the resource for data transmission and/or an OFDM symbol at end of the resource for data transmission, and indication of existence of a long PUCCH resource for the first terminal in the resource for data transmission.

20. The first terminal of claim 16, wherein the indication information comprises at least one of the followings:
indication of inexistence of a short PUCCH resource or a long PUCCH resource in the resource for data transmission, wherein the inexistence of the short PUCCH resource or the long PUCCH resource comprises: inexistence of a short PUCCH resource or a long PUCCH resource for the first terminal, and inexistence of a short PUCCH resource or a long PUCCH resource for any UE other than the first terminal;
indication of existence of a short PUCCH resource for the first terminal in the resource for data transmission, inexistence of a long PUCCH resource for the first terminal in the resource for data transmission, and inexistence of a short PUCCH resource or a long PUCCH resource for any UE other than the first terminal in the resource for data transmission;
indication of inexistence of a short PUCCH resource for the first terminal in the resource for data transmission, existence of a long PUCCH resource for the first terminal in the resource for data transmission, and inexistence of a short PUCCH resource or a long PUCCH resource for any UE other than the first terminal in the resource for data transmission;
indication of existence of a short PUCCH resource and a long PUCCH resource for the first terminal in the resource for data transmission, and inexistence of a short PUCCH resource or a long PUCCH resource for any UE other than the first terminal in the resource for data transmission;
indication of one or more OFDM symbols unused by the resource for data transmission;
indication of an OFDM symbol at start of the resource for data transmission and/or an OFDM symbol at end of the resource for data transmission;
indication of one or more OFDM symbols unused by the resource for data transmission, and indication of inexistence of a short PUCCH resource or a long PUCCH resource in the resource for data transmission, wherein the inexistence of the short PUCCH resource or the long PUCCH resource comprises: inexistence of a short PUCCH resource or a long PUCCH resource for the first terminal, and inexistence of a short PUCCH resource or a long PUCCH resource for any UE other than the first terminal;
indication of one or more OFDM symbols unused by the resource for data transmission, and indication of existence of a short PUCCH resource for the first terminal in the resource for data transmission, inexistence of a long PUCCH resource for the first terminal in the resource for data transmission, and inexistence of a short PUCCH resource or a long PUCCH resource for any UE other than the first terminal in the resource for data transmission;
indication of one or more OFDM symbols unused by the resource for data transmission, and indication of inexistence of a short PUCCH resource for the first terminal in the resource for data transmission, existence of a long PUCCH resource for the first terminal in the resource for data transmission, and inexistence of a short PUCCH resource or a long PUCCH resource for any UE other than the first terminal in the resource for data transmission;
indication of one or more OFDM symbols unused by the resource for data transmission, and indication of existence of a short PUCCH resource and a long PUCCH resource for the first terminal in the resource for data transmission, and inexistence of a short PUCCH resource or a long PUCCH resource for any UE other than the first terminal in the resource for data transmission;
indication of an OFDM symbol at start of the resource for data transmission and/or an OFDM symbol at end of the resource for data transmission, and indication of inexistence of a short PUCCH resource or a long PUCCH resource in the resource for data transmission, wherein the inexistence of the short PUCCH resource or the long PUCCH resource comprises: inexistence of a short PUCCH resource or a long PUCCH resource for first terminal, and inexistence of a short PUCCH resource or a long PUCCH resource for any UE other than the first terminal in the resource for data transmission;
indication of an OFDM symbol at start of the resource for data transmission and/or an OFDM symbol at end of the resource for data transmission, and indication of existence of a short PUCCH resource for the first terminal in the resource for data transmission, inexistence of a long PUCCH resource for the first terminal in the resource for data transmission, and inexistence of a short PUCCH resource or a long PUCCH resource for any UE other than the first terminal in the resource for data transmission;
indication of an OFDM symbol at start of the resource for data transmission and/or an OFDM symbol at end of the resource for data transmission, and indication of inexistence of a short PUCCH resource for the first terminal in the resource for data transmission, existence of a long PUCCH resource for the first terminal in the resource for data transmission, and inexistence of a short PUCCH resource or a long PUCCH resource for any UE other than the first terminal in the resource for data transmission; or
indication of an OFDM symbol at start of the resource for data transmission and/or an OFDM symbol at end of the resource for data transmission, and indication of existence of a short PUCCH resource and a long PUCCH resource for the first terminal in the resource for data transmission, and inexistence of a short PUCCH resource or a long PUCCH resource for any UE other than the first terminal in the resource for data transmission.

21. A method for determining a data transmission resource, comprising:
notifying or broadcasting allocation information of a physical uplink control channel, PUCCH, resource in a slot;
allocating a resource for data transmission in a physical uplink shared channel, PUSCH; and
receiving data allocated resource for data transmission, and removing a resource occupied by a PUCCH from the resource for data transmission to obtain a resource actually used for data transmission in the resource for data transmission.

22. The method of claim 21, wherein notifying or broadcasting the allocation information of the PUCCH resource in the slot comprises at least one of the followings
notifying or broadcasting a PUCCH resource range for all user equipments, UEs, in the slot;
notifying or broadcasting a PUCCH resource range in the slot;
notifying or broadcasting a PUCCH resource range configured semi-statically in the slot; or
notifying or broadcasting a PUCCH resource range for other UEs in the slot, wherein the other UEs are UEs other than the UE with the allocated resource for data transmission.

23. The method of claim 21, wherein the PUCCH resource comprises one of the followings:
a short PUCCH resource;
a long PUCCH resource; or
a short PUCCH resource and a long PUCCH resource.

24. The method of claim 21, wherein removing the resource occupied by the PUCCH from a resource corresponding to information of the resource for data transmission comprises:
when the resource for data transmission comprises part or all of the notified or broadcasted PUCCH resource in the slot, removing the part or all of the PUCCH resource from the resource corresponding to information of the resource for data transmission;
wherein the resource occupied by the PUCCH comprises at least one of the followings: part of orthogonal frequency-division multiplexing, OFDM, symbols, part of physical resource blocks, PRBs, part of subcarriers or part of combinations, wherein the part of combinations comprise any combination of the part of OFDM symbols, the part of PRBs and the part of subcarriers.

25. The method of claim 21, wherein after allocating the resource for data transmission in the PUSCH, the method further comprises:
sending resource indication information, wherein the resource indication information is used for indicating whether the resource for data transmission comprises a PUCCH resource.

26. The method of claim 25, wherein the resource indication information and the resource corresponding to information of the resource for data transmission are sent in same uplink grant information.

27. The method of claim 21, wherein after allocating the resource for data transmission in the PUSCH, the method further comprises:
when a UE has a PUSCH and a PUCCH to be transmitted in a same slot, agreeing that a PUCCH resource for the UE is located in a resource for data transmission for the UE, and agreeing the PUCCH resource occupied by the UE.

28. The method of claim 21, wherein notifying or broadcasting the allocation information of the PUCCH resource in the slot comprises:
notifying or broadcasting the allocation information of the PUCCH resource in the slot in a transmission manner, wherein the transmission manner comprises a cell transmission manner and a beam transmission manner.

29. A method for determining a data transmission resource, comprising:
receiving allocation information of a physical uplink control channel, PUCCH, resource in a slot notified or broadcasted by a base station, and receiving information of a resource for data transmission in a physical uplink shared channel, PUSCH, sent by the base station; and
removing a resource occupied by a PUCCH from a resource corresponding to the information of the resource for data transmission to obtain a resource actually used for data transmission in the resource for data transmission.

30. The method of claim 29, further comprising:
sending data to the base station in the resource actually used for data transmission.

31. The method of claim 29, wherein the notification or broadcasting of the allocation information of the PUCCH resource in the slot comprises at least one of the followings:
notifying or broadcasting a PUCCH resource range of all user equipments, UEs, in the slot;
notifying or broadcasting a PUCCH resource range in the slot;
notifying or broadcasting a PUCCH resource range configured semi-statically in the slot; or
notifying or broadcasting a PUCCH resource range of other UEs in the slot, wherein the other UEs are UEs other than the UE with the allocated to the resource for data transmission.

32. The method of claim 29, wherein the PCCH resource comprises one of the followings:
a short PUCCH resource;
a long PUCCH resource; or
a short PUCCH resource and a long PUCCH resource.

33. The method of claim 29, wherein removing the resource occupied by the PUCCH from the resource corresponding to information of the resource for data transmission comprises:
when the resource for data transmission comprises part or all of the notified or broadcasted PUCCH resource in the slot, removing the part or all of the PUCCH resource from the resource corresponding to information of the resource for data transmission;
wherein the resource occupied by the PUCCH comprises at least one of the followings: part of orthogonal frequency-division multiplexing, OFDM, symbols, part of physical resource blocks, PRBs, part of subcarriers or part of combinations, wherein the part of combinations comprise any combination of the part of OFDM symbols, the part of PRBs and the part of subcarriers.

34. The method of claim 29, wherein after receiving information of the resource for data transmission in the PUSCH sent by the base station, the method further comprises:
receiving resource indication information sent by the base station, wherein the resource indication information is used for indicating whether the resource for data transmission allocated by the base station in the PUSCH comprises a PUCCH resource; or receiving resource indication information sent by the base station, wherein the resource indication information is used for indicating whether rate matching is required for the resource for data transmission allocated by the base station in the PUSCH to remove the resource occupied by the PUCCH.

35. The method of claim 34, wherein removing the resource occupied by the PUCCH from the resource corresponding to information of the resource for data transmission comprises:
in a case that the resource indication information indicates that the resource for data transmission allocated by the base station in the PUSCH comprises the PUCCH resource, removing the resource occupied by the PUCCH from the resource corresponding to information of the resource for data transmission.

36. The method of claim 34, further comprising:
in a case that the resource indication information indicates that the resource for data transmission allocated by the base station in the PUSCH does not comprise the PUCCH resource, not removing the resource occupied by the PUCCH from the resource corresponding to information of the resource for data transmission.

37. The method of claim 34, wherein the resource indication information and the resource corresponding to information of the resource for data transmission are received in same uplink grant information.

38. The method of claim 29, wherein after receiving the allocation information of the PUCCH resource in the slot notified or broadcasted by the base station, the method further comprises:
when a PUSCH and a PUCCH need to be transmitted in a same slot, agreeing with the base station that a PUCCH resource for a UE is located in a resource for data transmission for the UE, and agreeing with the base station the PUCCH resource occupied by the UE.

39. The method of claim 29, wherein receiving the allocation information of the PUCCH resource in the slot notified or broadcasted by the base station comprises:
receiving the allocation information of the PUCCH resource in the slot notified or broadcasted by the base station in a transmission manner, wherein the transmission manner comprises a cell transmission manner and a beam transmission manner.

40. A second apparatus for determining a data transmission resource, comprising:
a sending module, which is configured to notify or broadcast allocation information of a physical uplink control channel, PUCCH, resource in a slot;
an allocating module, which is configured to allocate a resource for data transmission in a physical uplink shared channel, PUSCH; and
a processing module, which is configured to receive data via the allocated resource for data transmission, and remove a resource occupied by a PUCCH from a resource corresponding to information of the resource for data transmission to obtain a resource actually used for data transmission in the resource for data transmission.

41. The second apparatus of claim 40, wherein the sending module is specifically configured to perform at least one of the followings:
notifying or broadcasting a PUCCH resource range for all user equipments, UEs, in the slot;
notifying or broadcasting a PUCCH resource range in the slot;
notifying or broadcasting a PUCCH resource range configured semi-statically in the slot; or
notifying or broadcasting a PUCCH resource range for other UEs in the slot, wherein the other UEs are UEs other than the UE with the allocated resource for data transmission.

42. The second apparatus of claim 40, wherein the PUCCH resource comprises one of the followings:
a short PUCCH resource;
a long PUCCH resource; or
a short PUCCH resource and a long PUCCH resource.

43. The second apparatus of claim 40, wherein the processing module is configured to:
when the resource for data transmission comprises part or all of the notified or broadcasted PUCCH resource in the slot, removing the part or all of the PUCCH resource from the resource corresponding to information of the resource for data transmission;
wherein the resource occupied by the PUCCH comprises at least one of the following: part of orthogonal frequency-division multiplexing, OFDM, symbols, part of physical resource blocks, PRBs, part of subcarriers or part of combinations, wherein the part of combinations comprise any combination of the part of OFDM symbols, the part of PRBs and the part of subcarriers.

44. The second apparatus of claim 40, wherein the sending module is further configured to:
send resource indication information, wherein the resource indication information is used for indicating whether the resource for data transmission comprises a PUCCH resource.

45. The second apparatus of claim 44, wherein the resource indication information and the resource corresponding to information of the resource for data transmission are sent in same uplink grant information.

46. The second apparatus of claim 40, wherein the processing module is further configured to:
when a UE has a PUSCH and a PUCCH to be transmitted in a same slot, agreeing that a PUCCH resource for the UE is located in a resource for data transmission for the user equipment, and agreeing the PUCCH resource occupied by the UE.

47. The second apparatus of claim 40, wherein the sending module is configured to:
notify or broadcast the allocation information of the PUCCH resource in the slot in a transmission manner, wherein the transmission manner comprises a cell transmission manner and a beam transmission manner.

48. A second terminal for determining a data transmission resource, comprising:
a receiving module, which is configured to receive allocation information of a physical uplink control channel, PUCCH, resource in a slot notified or broadcasted by a base station, and receive information of a resource for data transmission in a physical uplink shared channel, PUSCH, sent by the base station; and
a processing module, which is configure to remove a resource occupied by a PUCCH from a resource corresponding to the information of the resource for data transmission to obtain a resource actually used for data transmission in the resource for data transmission.

49. The second terminal of claim 48, further comprising:
a sending module, which is configured to send data to the base station in the resource actually used for data transmission.

50. The second terminal of claim 48, wherein the notification or broadcasting of the allocation information of the PUCCH resource in the slot comprises at least one of the followings:
notifying or broadcasting a PUCCH resource range for all user equipments, UEs, in the slot;
notifying or broadcasting a PUCCH resource range in the slot;
notifying or broadcasting a PUCCH resource range configured semi-statically in the slot; or
notifying or broadcasting a PUCCH resource range for other UEs in the slot, wherein the other UEs are UEs other than the UE with the allocated resource for data transmission.

51. The second terminal of claim 48, wherein the PUCCH resource comprises one of the followings:
a short PUCCH resource;
a long PUCCH resource; or
a short PUCCH resource and a long PUCCH resource.

52. The second terminal of claim 48, wherein the processing module is configured to:
when the resource for data transmission comprises part or all of the notified or broadcasted PUCCH resource in the slot, remove the part or all of the PUCCH resource from the resource corresponding to information of the resource for data transmission;
wherein the resource occupied by the PUCCH comprises at least one of the following: part of orthogonal frequency-division multiplexing, OFDM, symbols, part of physical resource blocks, PRBs, part of subcarriers or part of combinations, wherein the part of combinations comprise any combination of the part of OFDM symbols, the part of PRBs and the part of subcarriers.

53. The second terminal of claim 48, wherein the receiving module is further configured to:
receive resource indication information sent by the base station, wherein the resource indication information is used for indicating whether the resource for data transmission allocated by the base station in the PUSCH comprises a PUCCH resource; or receive resource indication information sent by the base station, wherein the resource indication information is used for indicating whether rate matching is required for the resource for data transmission allocated by the base station in the PUSCH to remove the resource occupied by the PUCCH.

54. The second terminal of claim 53, wherein the processing module is configured to:
in a case that the resource indication information indicates that the resource for data transmission allocated by the base station in the PUSCH comprises the PUCCH resource, remove the resource occupied by the PUCCH from the resource corresponding to information of the resource for data transmission.

55. The second terminal of claim 53, wherein the processing module is further configured to:
in a case that the resource indication information indicates that the resource for data transmission allocated by the base station in the PUSCH does not comprise the PUCCH resource, not remove the resource occupied by the PUCCH from the resource corresponding to information of the resource for data transmission.

56. The second terminal of claim 53, wherein the resource indication information and the resource corresponding to information of the resource for data transmission are received in same uplink grant information.

57. The second terminal of claim 48, wherein the processing module is further configured to:
when a PUSCH and a PUCCH need to be transmitted in a same slot, agree with the base station that a PUCCH resource for the second terminal is located in a resource for data transmission for the second terminal, and agree with the base station the PUCCH resource occupied by the second terminal.

58. The second terminal of claim 48, wherein the receiving module is configured to:
receive the allocation information of the PUCCH resource in the slot notified or broadcasted by the base station in a transmission manner, wherein the transmission manner comprises a cell transmission manner and a beam transmission manner.

59. A first base station for determining a data transmission resource, comprising:
an interface, a bus, a memory and a processor, wherein the interface, the memory and the processor are connected via the bus, the memory is configured to store instructions, and the processor reads the instructions to:
send physical uplink shared channel, PUSCH, resource information and indication information;
wherein the PUSCH resource information comprises information used for indicating a resource allocated for data transmission of a user equipment, UE, in a PUSCH, and
the indication information is used for indicating at least one of the followings:
whether the resource for data transmission comprises a physical uplink control channel, PUCCH, resource;
a resource actually used for data transmission in the resource for data transmission; or
whether rate matching is required for the resource for data transmission to remove a resource occupied by a PUCCH.

60. A first device for determining a data transmission resource, comprising:
an interface, a bus, a memory and a processor, wherein the interface, the memory and the processor are connected via the bus, the memory is configured to store instructions, and the processor reads the instructions to:
receive physical uplink shared channel, PUSCH, resource information and indication information sent by a base station;
wherein the PUSCH resource information comprises information used for indicating a resource for data transmission allocated by the base station in a PUSCH, and the indication information is used for indicating at least one of the followings:
whether the resource for data transmission comprises a physical uplink control channel, PUCCH, resource;
a resource actually used for data transmission in the resource for data transmission; or
whether rate matching is required for the resource for data transmission to remove a resource occupied by a PUCCH.

61. A second base station for determining a data transmission resource, comprising:
an interface, a bus, a memory and a processor, wherein the interface, the memory and the processor are connected via the bus, the memory is configured to store instructions, and the processor reads the instructions to:
notify or broadcast allocation information of a physical uplink control channel, PUCCH, resource in a slot;
allocate a resource for data transmission in a physical uplink shared channel, PUSCH; and
receiving data via the allocated resource for data transmission, and removing a resource occupied by a PUCCH from the resource for data transmission to obtain a resource actually used for data transmission in the resource for data transmission.

62. A second device for determining a data transmission resource, comprising:
an interface, a bus, a memory and a processor, wherein the interface, the memory and the processor are connected via the bus, the memory is configured to store instructions, and the processor reads the instructions to:
receive allocation information of a physical uplink control channel, PUCCH, resource in a slot notified or broadcasted by a base station, and receive information of a resource for data transmission in a physical uplink shared channel, PUSCH, sent by the base station; and
remove a resource occupied by a PUCCH from a resource corresponding to the information of the resource for data transmission to obtain a resource actually used for data transmission in the resource for data transmission.

63. A computer-readable storage medium, which is configured to store computer-executable instructions, wherein, after being executed, the computer-executable instructions are capable of implementing the method of any one of claims 1 to 5, 6 to 10, 21 to 28, or 29 to 39.
